(19) Europäisches Patentamt
European Patent Office
Office européen des brevets

(11) EP 1 483 272 B1

# (12) FASCICULE DE BREVET EUROPEEN

(45) Date de publication et mention de la délivrance du brevet:
**11.01.2006 Bulletin 2006/02**

(21) Numéro de dépôt: **03715024.0**

(22) Date de dépôt: **20.01.2003**

(51) Int Cl.:
*C07F 7/18* (2006.01) *C07F 7/12* (2006.01)
*C07D 323/00* (2006.01)

(86) Numéro de dépôt international:
**PCT/FR2003/000168**

(87) Numéro de publication internationale:
**WO 2003/062250 (31.07.2003 Gazette 2003/31)**

(54) **DERIVES UREIDO OU CARBAMATES D'ETHERS-COURONNES ET DE SILICIUM, UTILISABLES POUR PREPARER DES SUPPORTS DESTINES A LA SEPARATION PAR CHROMATOGRAPHIE DE CATIONS METALLIQUES ET DE MOLECULES ORGANIQUES COMPORTANT DES FONCTIONS AMINES**

UREIDO- ODER CARBAMATE DERIVATE VON KRONENETHER UND SILIZIUM, VERWENDBAR ZUR HERSTELLUNG VON TRÄGERMATERIALIEN ZUR CHROMATOGRAPHISCHEN TRENNUNG METALLISCHER KATIONEN UND AMINE ENTHALTENDER ORGANISCHER VERBINDUNGEN

UREA OR CARBAMATE DERIVATIVES OF CROWN ETHERS AND SILICON USEFUL FOR THE PREPARATION OF SUPPORTS FOR CHROMATOGRAPHIC SEPARATION OF METAL CATIONS AND ORGANIC MOLECULES COMPRISING AN AMINO FUNCTION

(84) Etats contractants désignés:
**AT BE BG CH CY CZ DE DK EE ES FI FR GB GR HU IE IT LI LU MC NL PT SE SI SK TR**

(30) Priorité: **23.01.2002 FR 0200804**

(43) Date de publication de la demande:
**08.12.2004 Bulletin 2004/50**

(73) Titulaire: **Commissariat à l'Energie Atomique
75752 Paris 15ème (FR)**

(72) Inventeurs:
- **BARRE, Yves
84100 UCHAUX (FR)**
- **SIMON, Marc
84100 ORANGE (FR)**
- **NEIGE, Roger
26700 PIERRELATTE (FR)**
- **DUVAL, Raphaël
14800 Deauville (FR)**

(74) Mandataire: **Poulin, Gérard
Brevatome
3, rue du Docteur Lancereaux
75008 Paris (FR)**

(56) Documents cités:
- **LAUTH ET AL: "Ion Chromatographic Separation on Silica grafted with benzo-18-C-6 crown ether" JOURNAL OF LIQUID CHROMATOGRAPHY, vol. 8, no. 13, 1985, pages 2403-2415, XP001105749**
- **MACHIDA ET AL.: "Enantiomer separation of amino compounds by a novel chiral stationary phase derived from crown ether" JOURNAL OF CHROMATOGRAPHY A, vol. 805, 1998, pages 85-92, XP002214934**
- **MYUNG H H ET AL: "Liquid chromatographic resolution of racemic amino acids and their derivatives on a new chiral stationary phase based on crown ether" JOURNAL OF CHROMATOGRAPHY A, ELSEVIER SCIENCE, NL, vol. 822, no. 1, 25 septembre 1998 (1998-09-25), pages 155-161, XP004140661 ISSN: 0021-9673**
- **KONTOS Z ET AL: "Enantioseparation of racemic organic ammonium perchlorates by a silica gel bound optically active di-tert-butylpyridino-18-crown-6 ligand" TETRAHEDRON: ASYMMETRY, ELSEVIER SCIENCE PUBLISHERS, AMSTERDAM, NL, vol. 10, no. 11, 4 juin 1999 (1999-06-04), pages 2087-2099, XP004174093 ISSN: 0957-4166**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

- D'ACQUARICA I ET AL: "Application of a new chiral stationary phase containing the glycopeptide antibiotic A-40,926 in the direct chromatographic resolution of beta-amino acids" TETRAHEDRON: ASYMMETRY, ELSEVIER SCIENCE PUBLISHERS, AMSTERDAM, NL, vol. 11, no. 11, juin 2000 (2000-06), pages 2375-2385, XP004205799 ISSN: 0957-4166
- D'ACQUARICA I ET AL: "Direct chromatographic resolution of carnitine and O-acylcarnitine enantiomers on a teicoplanin-bonded chiral stationary phase" JOURNAL OF CHROMATOGRAPHY A, ELSEVIER SCIENCE, NL, vol. 857, no. 1-2, 1 octobre 1999 (1999-10-01), pages 145-155, XP004362900 ISSN: 0021-9673
- MACHIDA Y ET AL: "Nuclear magnetic resonance studies for the chiral recognition of the novel chiral stationary phase derived from 18-crown-6 tetracarboxylic acid" JOURNAL OF CHROMATOGRAPHY A, ELSEVIER SCIENCE, NL, vol. 810, no. 1-2, 12 juin 1998 (1998-06-12), pages 33-41, XP004124765 ISSN: 0021-9673
- HYUN M H ET AL: "Liquid chromatographic resolution of racemic amines and amino alcohols on a chiral stationary phase derived from crown ether" JOURNAL OF CHROMATOGRAPHY A, ELSEVIER SCIENCE, NL, vol. 837, no. 1-2, 2 avril 1999 (1999-04-02), pages 75-82, XP004161589 ISSN: 0021-9673
- NAKAJIMA ET AL: "Ion Chromatography on Poly(Crown Ether)-Modified Silica possessing High Affinity for Sodium" JOURNAL OF LIQUID CHROMATOGRAPHY, vol. 7, no. 11, 1984, pages 2115-2125, XP001105107
- FAVRE-REGUILLON A ET AL: "Polymeric and Immobilized Crown Compounds, Material for Ion Separation" TETRAHEDRON, ELSEVIER SCIENCE PUBLISHERS, AMSTERDAM, NL, vol. 53, no. 4, 27 janvier 1997 (1997-01-27), pages 1343-1360, XP004105223 ISSN: 0040-4020
- FAVRE-REGUILLON A ET AL: "Synthesis and Evaluation of New Polyurethane - Based Material for Ion Separation" TETRAHEDRON LETTERS, ELSEVIER SCIENCE PUBLISHERS, AMSTERDAM, NL, vol. 36, no. 36, 4 septembre 1995 (1995-09-04), pages 6439-6442, XP004027253 ISSN: 0040-4039

## Description

### Domaine technique

La présente invention a pour objet de nouveaux dérivés uréido ou carbamates d'éthers-couronnes et de silicium, utilisables pour préparer des supports destinés à la séparation par chromatographie de cations et de molécules comportant des fonctions amines comme les amino-acides. Elle concerne plus particulièrement des supports à base de gel de silice sur lequel sont greffés des groupes uréido ou carbamate d'éther-couronne.

### Etat de la technique antérieure

On avait déjà envisagé de greffer des groupes comportant un éther-couronne sur des gels de silice, comme il est décrit dans J. Am. Chem. Soc., 97, 1975, p. 1259-1261 [1] ; Anal. Chem., 55, 1983, p. 463-467 [2] ; Bull. Chem. Soc. Jpn, 56, 1983, p. 3052-3056 [3] ; Bull. Chem. Soc. Jpn, 59, 1986, p. 1475-1480 [4]; Anal. Chem., 68, 1996, p. 2811-2817 [5] et Tetrahedron : Asymmety 10, 1999, p.2087-2099 [13].

Cependant, les voies de synthèse utilisées sont complexes et utilisent des bras de liaison de l'éther-couronne au gel de silice, ne comportant ni groupe uréido, ni groupe carbamate.

De plus, ces synthèses ne permettent pas d'obtenir une densité élevée de groupes greffés sur le gel de silice.

Il a, par ailleurs, été proposé dans J. Chromatogr. A, 857, 1999, p. 145-155 [14] et dans Tetrahedron : Asymmetry, 11, 2000, p. 2375-2385 [15], d'utiliser, pour la séparation d'acides aminés, un support de chromatographie HPLC obtenu par greffage d'antibiotiques glycopeptidiques sur un gel de silice porteur de groupes aminopropyles, ce greffage étant réalisé par l'intermédiaire d'un isocyanate aliphatique bifonctionnel.

### Exposé de l'invention

Selon l'invention, on a trouvé que des dérivés uréido ou carbamate d'éther-couronne et de silicium permettaient d'obtenir des supports à base de gel de silice, ayant une densité élevée de groupes éthers-couronnes par g de support.

Aussi, l'invention a pour objet de nouveaux composés qui sont des dérivés uréido ou carbamates d'éther-couronne et de silicium, utilisables pour fabriquer de tels supports.

Selon l'invention, le composé répond à la formule (I) :

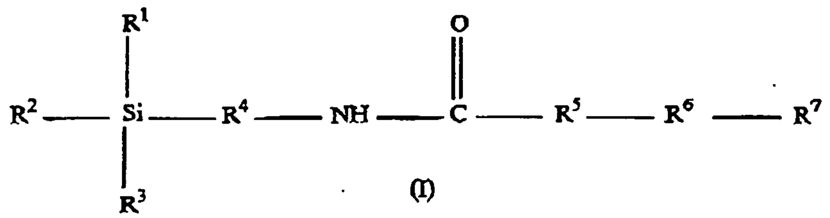

(I)

dans laquelle :

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne.

Ces composés comportent un groupe silane trifonctionnel qui permet de réaliser le greffage du composé sur le gel de silice.

De préférence, les groupes $R^1$, $R^2$ et $R^3$ du silane trifonctionnel sont des groupes méthoxy ou éthoxy.

On peut toutefois utiliser un silane trifonctionnel dans lequel $R^1$, $R^2$ et $R^3$ sont des atomes d'halogène (fluor, chlore, brome, iode), de préférence le chlore.

Dans ces composés, $R^4$ et $R^6$ représentent indépendamment un groupe hydrocarboné aliphatique, cycloaliphatique ou aromatique, substitué ou non substitué, comportant éventuellement un ou plusieurs hétéroatomes choisis parmi O, S, N et Si. $R^6$ peut représenter aussi une simple liaison.

Ainsi, $R^4$ et $R^6$ peuvent être un groupe alkylène, par exemple de formule $-(CH_2)_n-$ avec n étant un nombre entier de 1 à 20 ; un groupe arylène, par exemple phénylène ; un groupe alkylarylène, par exemple paraxylène ; un groupe arylalkylène ; et des groupes comportant un enchaînement de groupes alkylène(s) et aryléne(s) éventuellement reliés par des atomes de O, S, N et/ou Si.

A titre d'exemple d'un tel enchaînement, on peut citer le groupe de formule (II) :

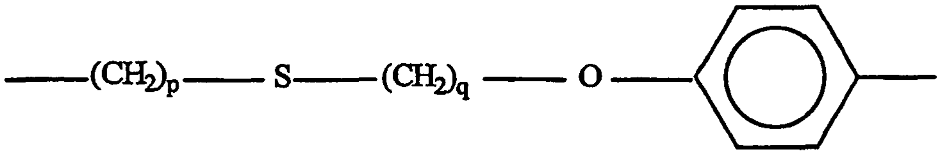
(II)

dans laquelle p et q sont des nombres entiers, identiques ou différents, tels que $p+q \leq 14$.

Dans les composés de formule (I), $R^5$ peut représenter -NH-, ce qui correspond aux dérivés uréido, ou -O-, ce qui correspond aux dérivés carbamate.

Selon l'invention, le groupe $R^7$ est dérivé d'un éther-couronne tel que ceux répondant aux formules suivantes :

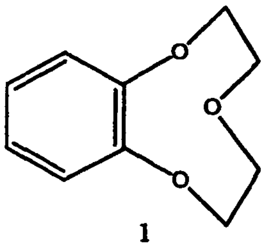
1

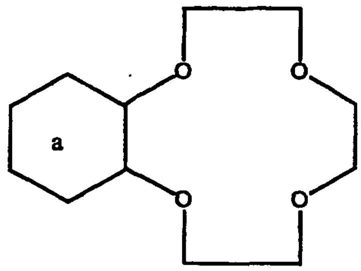
2 a = benzo
3 a = cyclohexyl

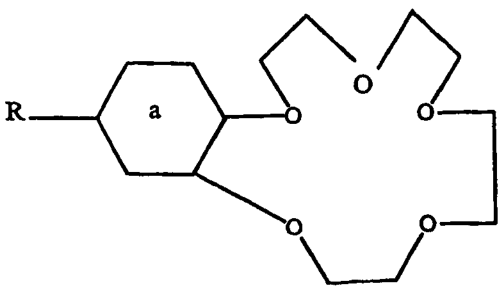
4 a = benzo R=H
5 a = benzo R=r-butyl
6 a = 2,3-naphto
7 a = cyclohexyl R=H
8 a = cyclohexyl R=t-butyl
9 a = decalyl

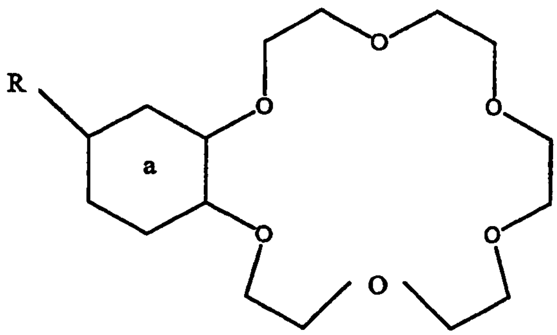
10 a = benzo R=H
11 a = benzo R=t-butyl
12 a = 2,3-naphto
13 a = cyclohexyl R=H
14 a = cyclohexyl R=t-butyl

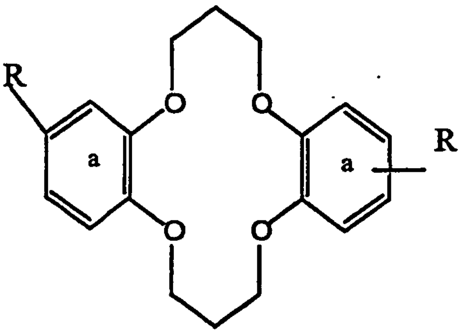

15a= benzo R=H
16a= benzo R=t-butyl
17a=cyclohexyl R=H
18a=cyclohexyl R=t-butyl

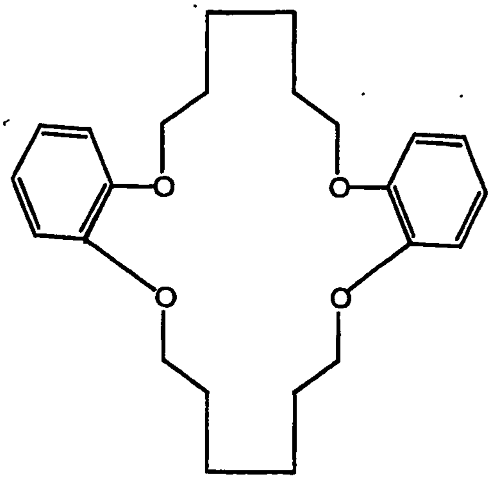

19

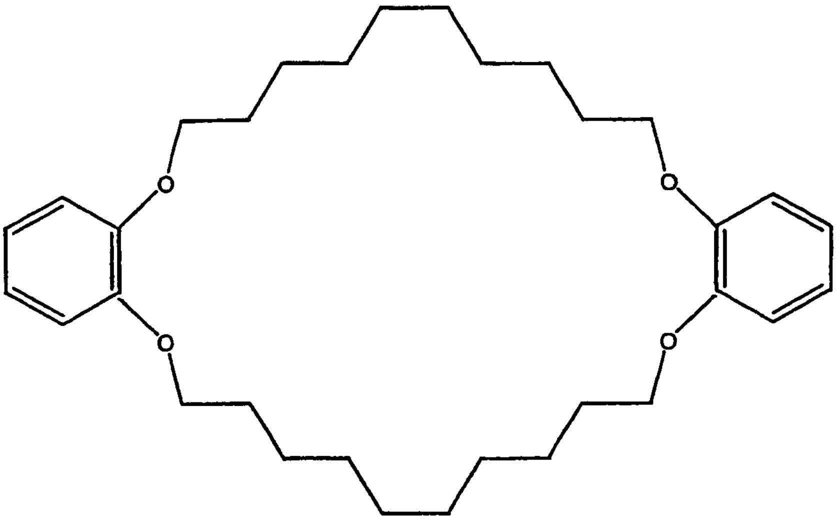

20

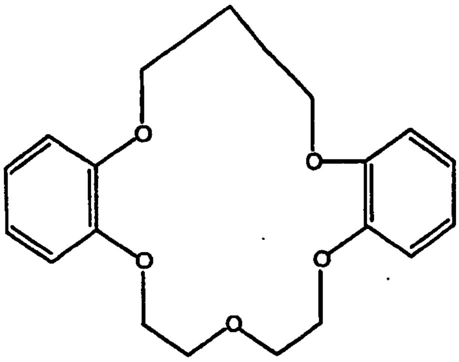

21

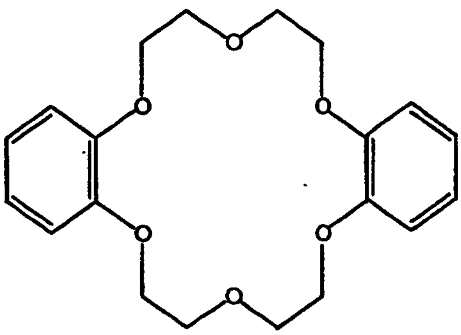

22

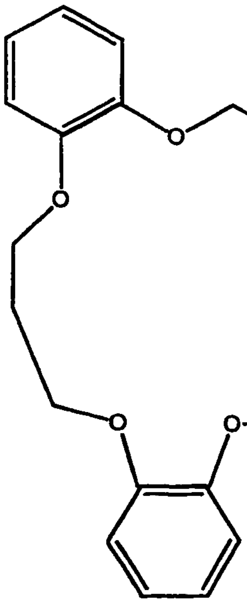

23

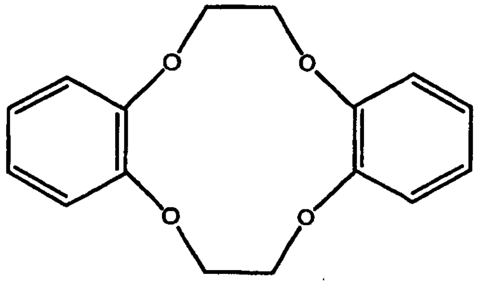

24

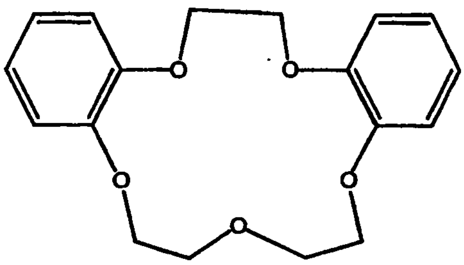

25

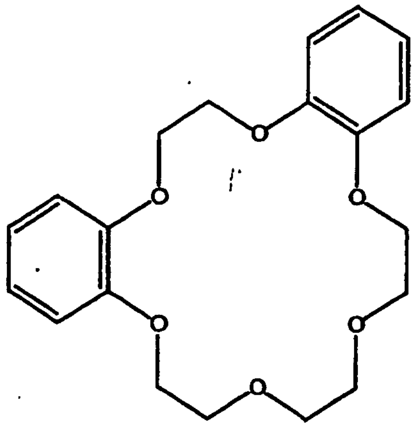

26

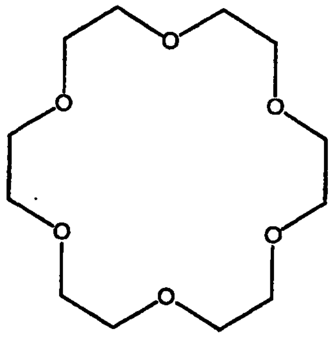

27

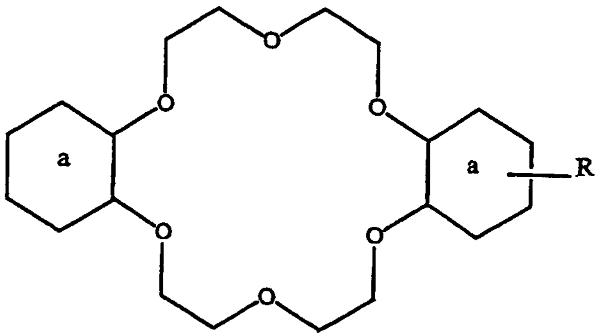

28 a = benzo R=H
29 a = benzo R=t-butyl
30 a = 2,3-naphto
31 a = cyclohexyl R=H
32 a = cyclohexyl R=t-butyl

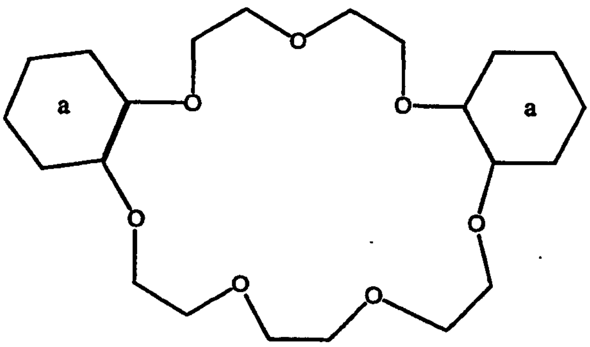

33 a = benzo
34 a = cyclohexyl

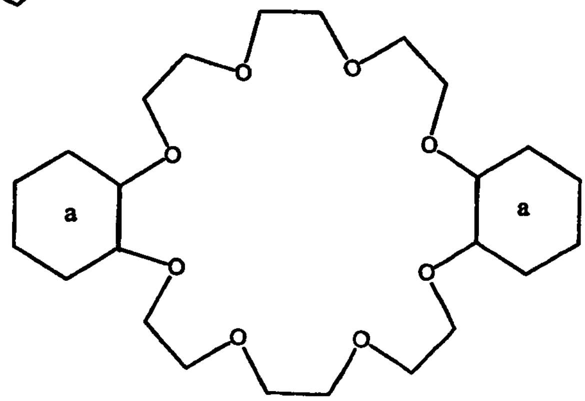

35 a = benzo
36 a = cyclohexyl
37 a = 2,3-naptho

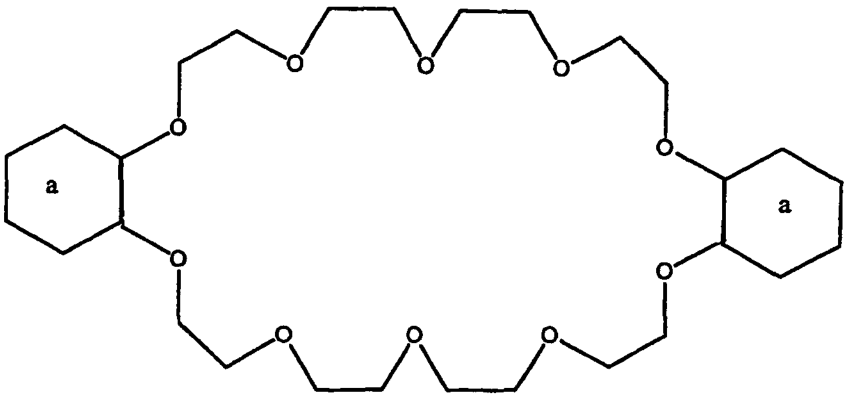

38 a = benzo
39 a = cyclohexyl

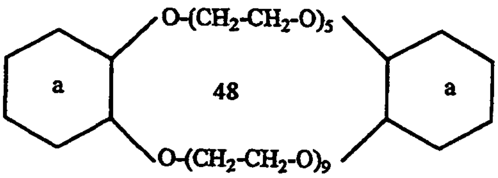

40 a = benzo
41 a = cyclohexyl

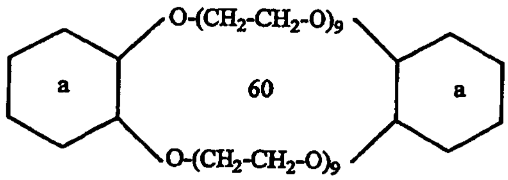

42 a = benzo
43 a = cyclohexyl

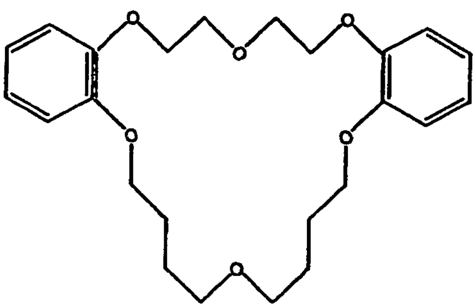

44

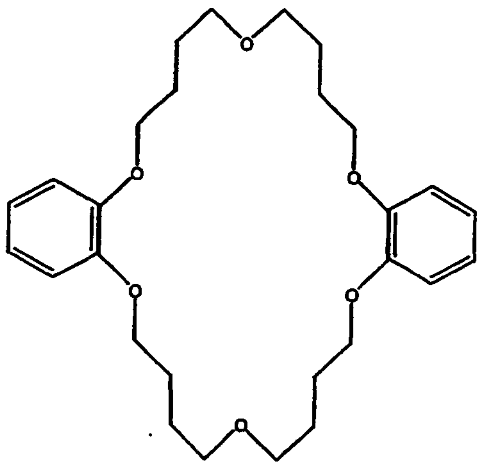

45

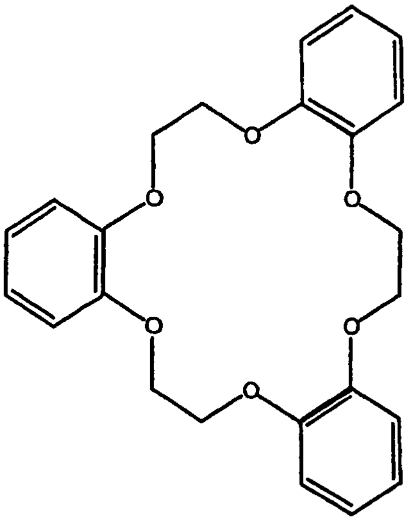

46

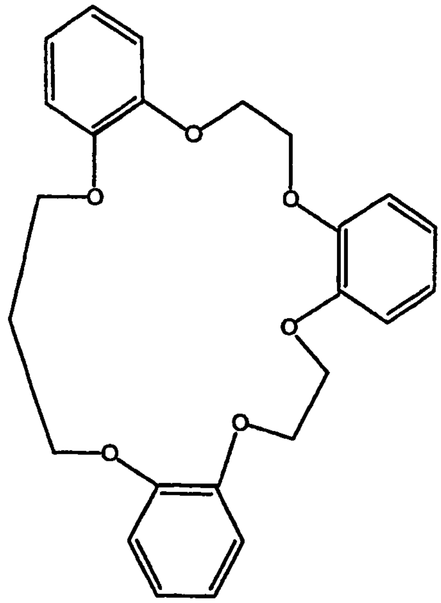

47

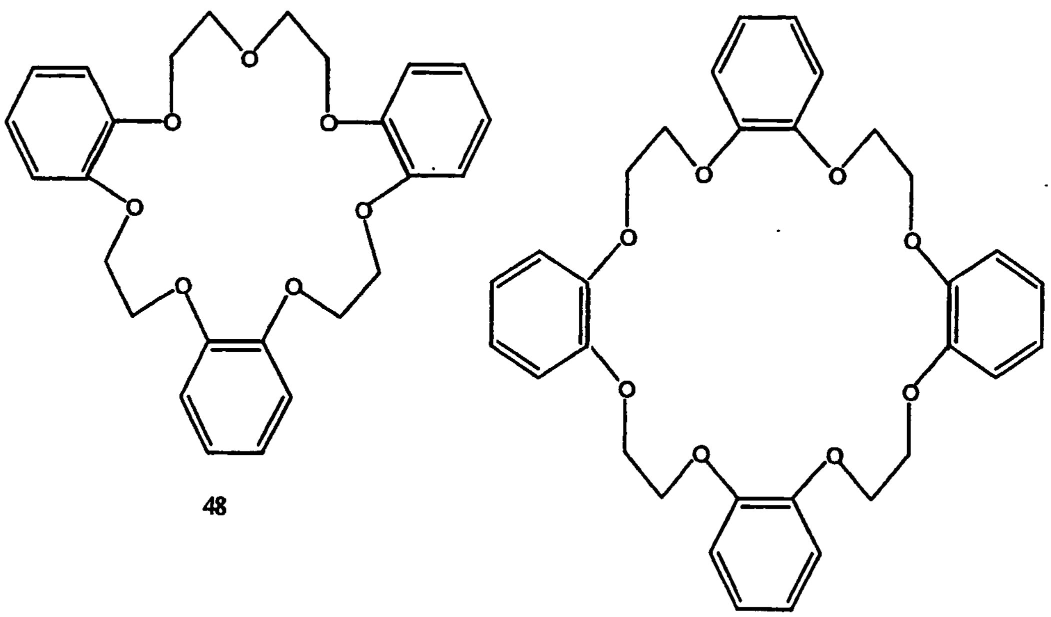

48

49

De préférence, $R^7$ représente un groupe dérivé de l'éther-couronne benzo 18C6 de formule (IIIa) :

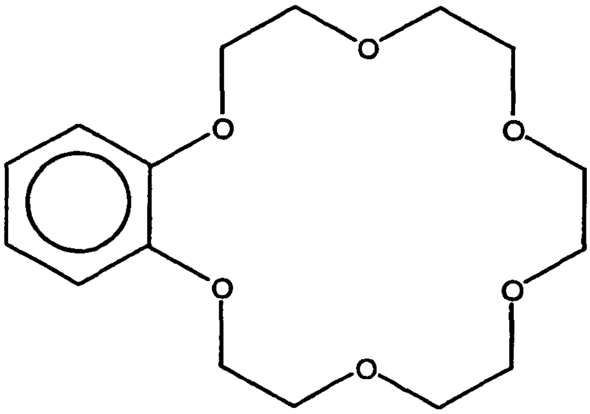

(IIIa)

ou de l'éther-couronne 18C6 de formule (IIIb) :

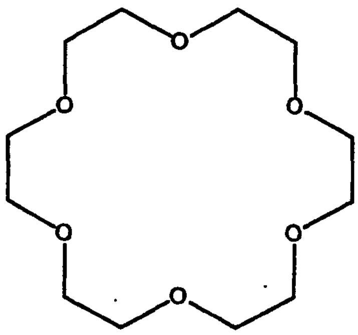

(IIIb)

27

Les composés de formule (I) peuvent être préparés à partir des isocyanates correspondants de formule (IV) :

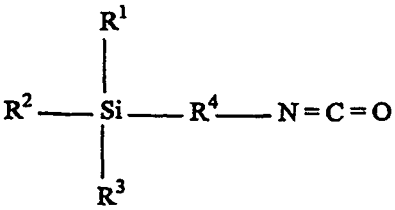

(IV)

dans laquelle $R^1$, $R^2$, $R^3$ et $R^4$ sont tels que définis ci-dessus, par réaction de ceux-ci avec une amine de formule $R^7$-$R^6$-$NH_2$ (V) ou un alcool de formule $R^7$-$R^6$-OH (VI) dans lesquelles $R^7$ représente un groupe dérivé d'un éther-couronne et $R^6$ a la signfication donnée ci-dessus.

La réaction d'un isocyanate de formule (IV) avec une amine ou un alcool de formule (V) ou (VI) est décrite par exemple dans "Advanced Organic Chemistry" 4th edition, 1992, p. 891-903, publié par John Wiley and Sons [6]. Selon l'invention, on effectue cette réaction en mélangeant un isocyanate de formule (IV) avec un composé de formule (V) ou (VI) mis en solution dans un solvant non réactif vis-à-vis des fonctions isocyanates, tels que les hydrocarbures halogénés comme le chloroforme et le dichlorométhane ; les éther-oxydes comme le diéthyléther, l'isopropyléther, le 1,4-dioxane ou le tétrahydrofurane ; les hydrocarbures comme les alcanes (hexane, pentane, ...) et les dérivés benzéniques (benzène et dérivés, toluène, ...).

L'isocyanate de formule (IV) préféré dans l'invention est le 3-(triéthoxysilyl) propylisocyanate de formule (VII) :

$$(C_2H_5O)_3—Si(CH_2)_3—N=C=O \qquad (VII)$$

que l'on peut faire réagir avec l'amine de formule (VIIIa) ou (VIIIb) :

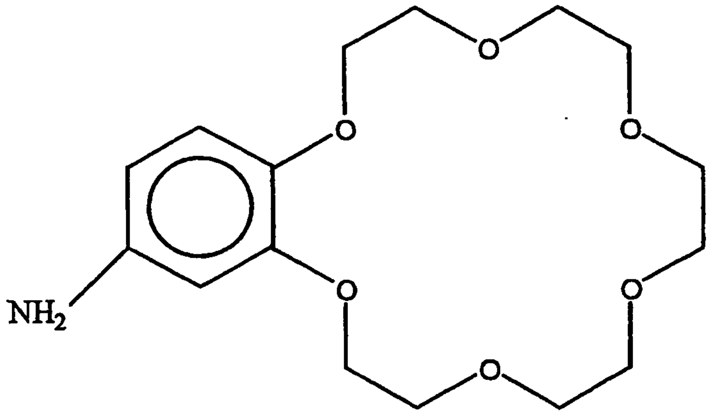

(VIIIa)

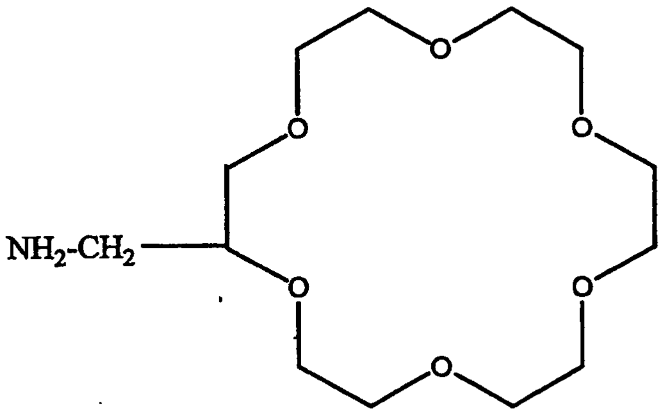

(VIIIb)

pour obtenir le composé de formule (IXa) ou (IXb) :

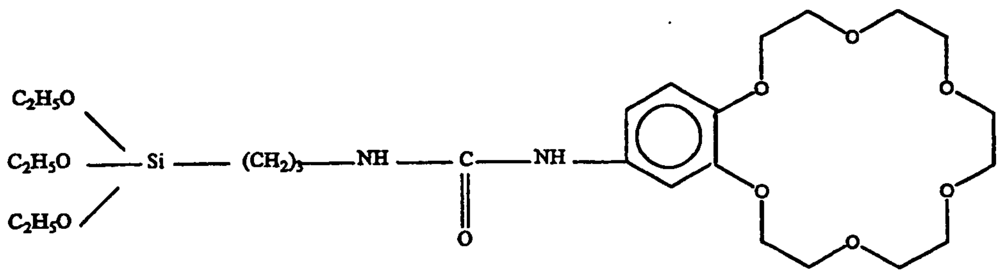

(IXa)

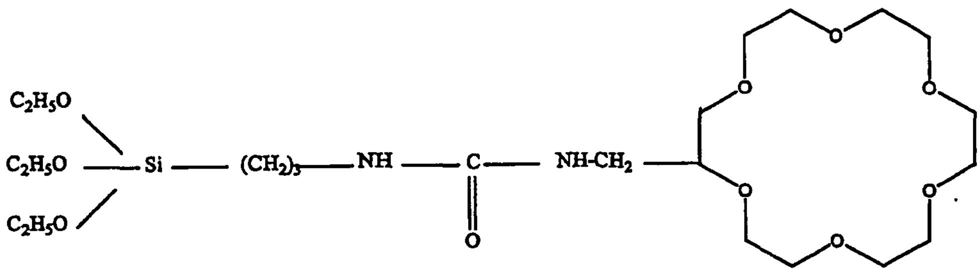

(IXb)

Dans ce mode de préparation des composés de formule (I) où $R^5$ représente NH, on peut opérer de la manière suivante.

On met l'amine de formule (V) en solution dans du tétrahydrofurane (THF) anhydre, par exemple à raison de 1 g d'amine pour 10 ml de THF, puis on ajoute à la solution l'isocyanate de formule (IV), en quantité stoechiométrique. On agite le milieu réactionnel à température ambiante jusqu'à disparition totale de l'amine de formule (V), celle-ci étant suivie par chromatographie sur couche mince (plaques, Aldrich Gel de silice sur aluminium 219, B-29-1) en utilisant le mélange chloroforme-méthanol (75:25) comme éluant.

On évapore ensuite la masse réactionnelle au bain-marie à 30°C sous vide jusqu'à élimination totale du solvant. Le rendement est quantitatif.

Lorsqu'on veut préparer des composés de formule (I) où $R^5$ représente O, on opère d'une manière similaire en utilisant un alcool de formule (VI) au lieu de l'amine de formule (V).

Les isocyanates de formule (IV) utilisés pour la préparation des composés de formule (I) sont des produits commerciaux ou peuvent être préparés par des procédés classiques, connus de l'homme du métier.

Les amines de formule (V) et les alcools de formule (VI) sont également des produits commerciaux ou peuvent être préparés par des procédés classiques.

A titre d'exemples de produits commerciaux, on peut citer les produits suivants :

| | |
|---|---|
| 2-(aminométhyl)-15-couronne-5 | (Aldrich chemicals référence 38,841-6) |
| 2-(aminométhyl)-18-couronne-6 | (Aldrich chemicals référence 38,843-2) |
| 4'-aminobenzo-15-couronne-5 | (Aldrich chemicals référence 39,342-8) |
| 4'-aminobenzo-18-couronne-6 | (Aldrich chemicals référence 44,402-2) |
| 4'-amino-5'-nitrobenzo-15-couronne-5 | (Aldrich chemicals référence 44,403-0) |
| 2-(hydroxyméthyl)-12-couronne 4 | (Aldrich chemicals référence 38-265-5) |
| 2-(hydroxyméthyl)-15-couronne-5 | (Aldrich chemicals référence 38,842-4) |
| 2-(hydroxyméthyl)-18-couronne-6 | (Aldrich chemicals référence 38,844-0) |

Cette liste n'est nullement limitative par rapport aux composés pouvant être utilisés dans l'invention.

Selon une variante de réalisation, les composés de formule (I) dans laquelle $R^5$ représente NH ou O, peuvent être préparés par réaction d'un composé éthylénique de formule (X) :

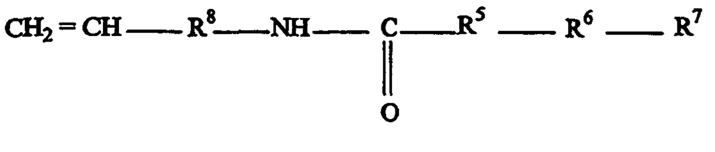

(X)

dans laquelle $R^5$, $R^6$ et R7 sont tels que définis ci-dessus, et $R^8$ représente un groupe hydrocarboné de 1 à 18 atomes de carbone, substitué ou non substitué, comprenant éventuellement dans sa chaîne un ou plusieurs hétéroatomes choisis parmi S, O, N et Si,
avec un composé de formule (XI) :

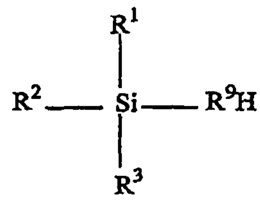

(XI)

dans laquelle $R^1$, $R^2$ et $R^3$ sont tels que définis ci-dessus, et $R^9$ est une simple liaison ou un groupe de formule $-(CH_2)_t-S-$ avec t étant un nombre entier allant de 1 à 9, $R^8$ et $R^9$ étant tels que l'ensemble $R^9-(CH_2)_2-R^8-$ correspond au groupe $R^4$.

Le composé éthylénique de formule (X) peut être préparé par réaction d'un isocyanate bifonctionnel de formule (XII) :

$$CH_2 = CH - R^8 - N = C = O \qquad (XII)$$

où $R^8$ a la signification donnée ci-dessus, avec une amine ou un alcool de formule (V) ou (VI) décrite ci-dessus. Cette réaction est identique à celle décrite précédemment pour la préparation des composés de formule (I) par réaction de l'isocyanate de formule (IV) avec l'amine ou l'alcool de formule (V) ou (VI). La synthèse des composés éthyléniques de formule (X) peut donc être effectuée comme celle des composés de formule (I) en remplaçant l'isocyanate de formule (IV) par l'isocyanate de formule (XII).

Les composés éthyléniques de formule (XII) peuvent être des produits commerciaux comme l'allylisocyanate ou être obtenus par des procédés classiques tels que celui décrit dans US-A-4 518 758 [7].

Les composés préférés de formule (XII) sont l'allylisocyanate, le 4-allyloxyphénylisocyanate et le 4-pentényloxyphénylisocyanate.

Les composés préférés de formule (X) sont les suivants :

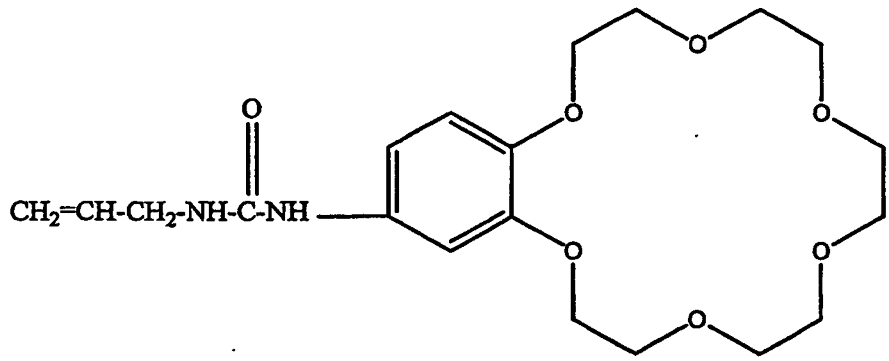

(Xa)

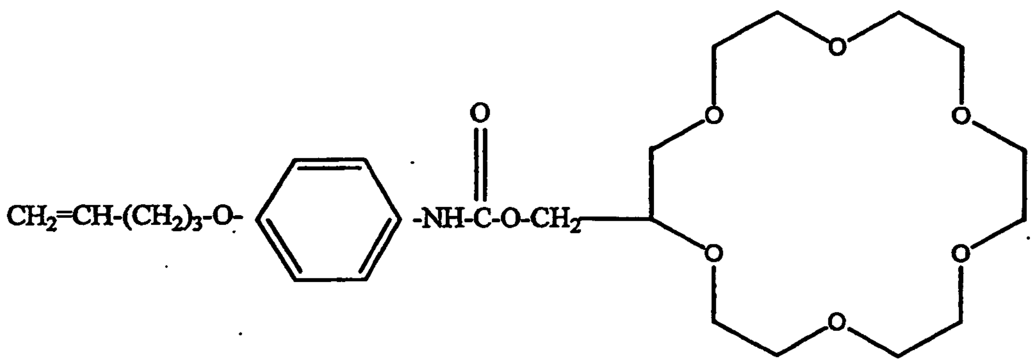

(Xb)

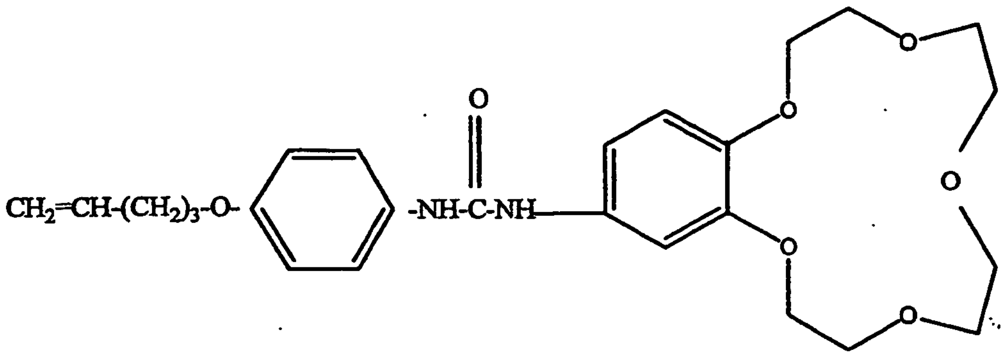

(Xc)

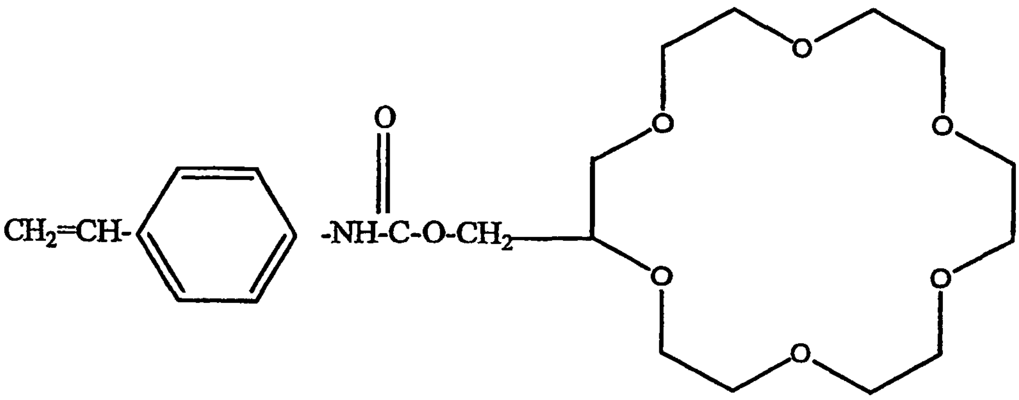

(Xd)

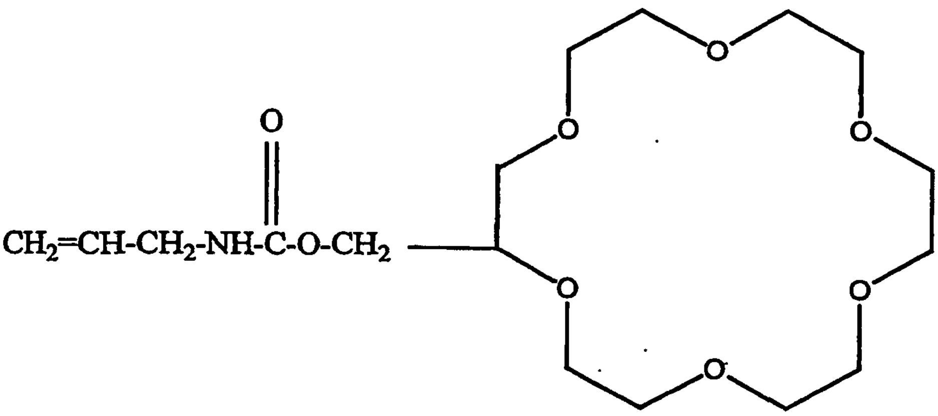

(Xe)

Dans cette variante, lorsque $R^9$ est un groupe de formule $-(CH_2)_t-S-$, on utilise la réaction d'addition d'un silane thiol de formule (XI) sur un composé éthylénique de formule (X), qui est une réaction d'addition anti-Markonikov conduisant à la formation de thioéthers, en présence de radicaux libres.

Une réaction de ce type est décrite dans les documents suivants : Tetrahedron Lett. 26, 1985, p. 3361-3364 [8] et New J. Chem. 13, 1989, p. 625-637 [9], pour immobiliser des composés sur un support par l'intermédiaire d'un lien covalent comportant une fonction thioéther.

Pour cette synthèse, on dissout tout d'abord le composé éthylénique de formule (X) dans un solvant organique inerte vis-à-vis des fonctions thiols, par exemple le toluène, le tétrahydrofurane ou le chloroforme, puis on ajoute à froid le silane thiol de formule (XI) dans laquelle $R^9$ représente $-(CH_2)_t-S-$, en quantité stoechiométrique ou en excès (jusqu'à 50% en moles). On ajoute au milieu réactionnel un initiateur de radicaux libres, en quantité catalytique. Cet initiateur peut être le peroxyde de benzoyle. On porte à reflux le milieu réactionnel jusqu'à disparition du composé éthylénique de départ de formule (X) ; celle-ci peut être suivie par chromatographie sur couche mince ou par spectrométrie infra-rouge (disparition de la bande d'absorption des fonctions éthyléniques). Le temps de chauffage préféré est de 24 h. On isole

ensuite le composé de formule (I) ainsi obtenu, par mise à sec en évaporant le solvant à la pression ordinaire puis sous-vide.

Le rendement est quantitatif (100%).

Dans cette variante, les composés de départ de formule (XI) peuvent être des hydrogénosilanes ($R^9$ représentant une simple liaison) ou des thiols ($R^9$ représentant $-(CH_2)_t-S-$).

A titre d'exemples de tels composés, on peut citer le trichlorosilane, le triméthoxysilane et le (3-mercaptopropyl) triméthoxysilane et le triéthoxysilane qui sont des composés commerciaux.

D'autres composés de formule (XI) peuvent être préparés par des procédés classiques.

On peut utiliser en particulier cette variante, pour préparer les composés de formule (XIIIa) et (XIIIb) :

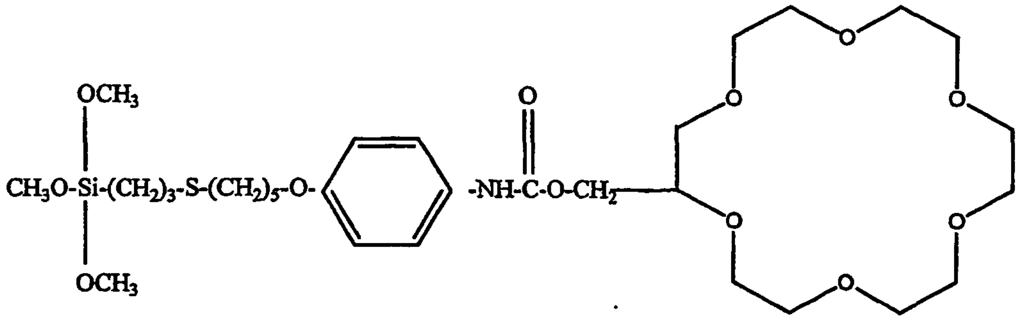

$C_{31}H_{55}O_{12}N, SSi$ $M_R = 693,93$ (XIIIa)

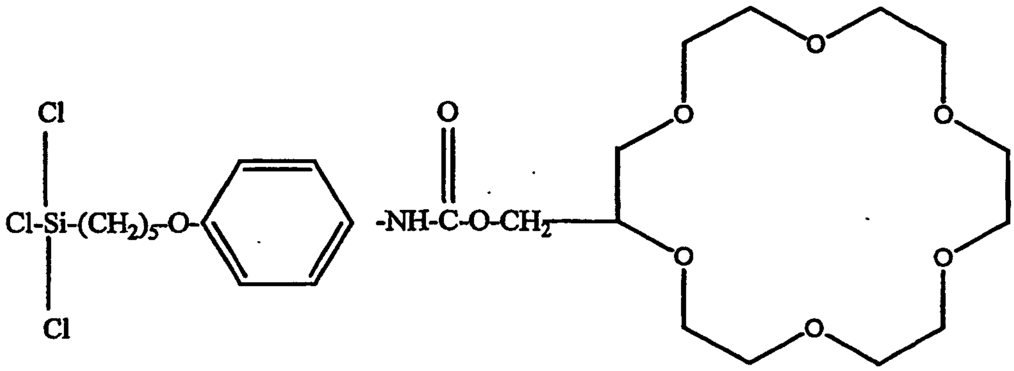

$C_{25}H_{40}O_9NCl_3Si$ $M_R = 633,04$ (XIIIb)

par réaction du composé éthylénique de formule (Xb) :

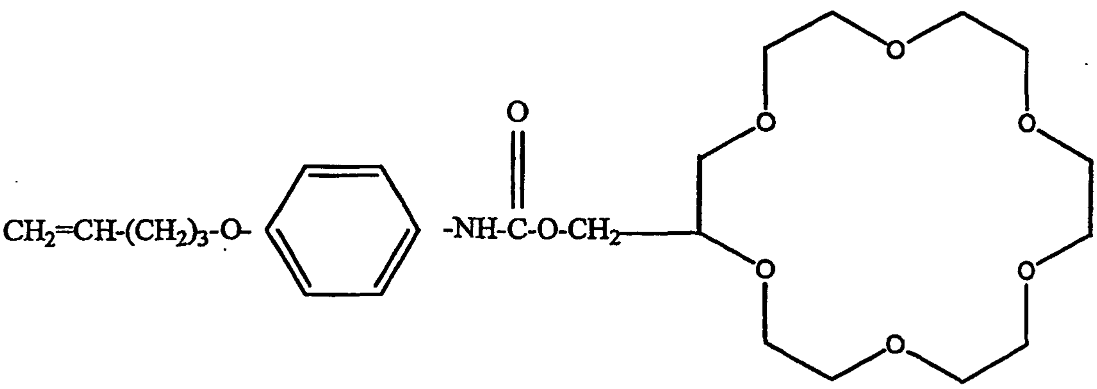

$C_{25}H_{39}O_9N$ $M_R = 467,59$ (Xb)

avec le composé de formule (XVa) ou (XVb) :

$(CH_3O)_3\ Si—(CH_2)_3—SH$ (XVa)

$Cl_3SiH$ (XVb)

Dans cette variante, lorsque $R^9$ est une simple liaison, la réaction du composé éthylénique de formule (X) sur l'hydrogénosilane de formule (XI) est une réaction d'hydrosilylation.

Une réaction de ce type est décrite dans Chromatographia, vol. 25, n°4, 1988, pages 265-271 [10].

Pour effectuer cette réaction, on peut opérer de la manière suivante.

On dissout le composé éthylénique de formule (X) dans un solvant inerte vis-à-vis de l'hydrosilylation, par exemple un alcane, un dérivé du benzène ou un hydrocarbure halogéné, en particulier le toluène, le 1,4-dioxane ou le chloroforme. On ajoute ensuite l'hydrogénosilane de formule (XI) à la solution, en quantité stoechiométrique ou en léger excès (jusqu'à 10% en moles), de préférence en quantité stoechiométrique, et on ajoute au milieu réactionnel un complexe métallique à base de rhodium ou de platine, en quantité catalytique, par exemple de l'acide hexachloroplatinique. On porte la masse réactionnelle à reflux du solvant jusqu'à disparition du composé éthylénique de formule (X) et celle concomitante de l'hydrogénosilane de formule (XI). Cette disparition peut être suivie par chromatographie sur couche mince ou par spectrométrie infrarouge (disparition de la bande d'absorption des fonctions éthyléniques). On refroidit ensuite le milieu réactionnel puis on le filtre pour éliminer le complexe à base de rhodium ou de platine. Le filtrat contenant le composé de formule (I) est mis à sec. Le rendement est quantitatif (100%).

Les composés de formule (I) de l'invention peuvent être utilisés pour l'obtention de supports à base de gel de silice, utiles pour la séparation chromatographique de cations métalliques et de molécules organiques comportant des fonctions amine.

Aussi, l'invention a également pour objet un support à base de gel de silice, utile pour la séparation chromatographique des isotopes de métaux alcalins ou alcalino-terreux, comportant des groupes de formule (XVI) :

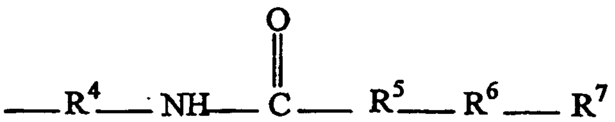

(XVI)

dans laquelle

- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne,

greffés sur le gel de silice par au moins une liaison covalente comportant au moins un radical siloxane :

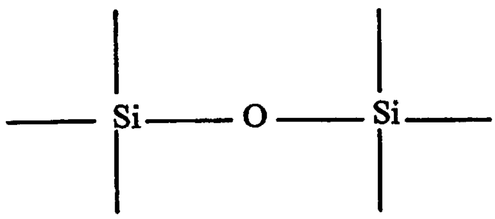

De préférence, la densité en groupes greffés de formule (XVI) est d'au moins 0,5 mmol par g de support.

A titre d'exemple, les groupes greffés sur le gel de silice répondent à l'une des formules suivantes :

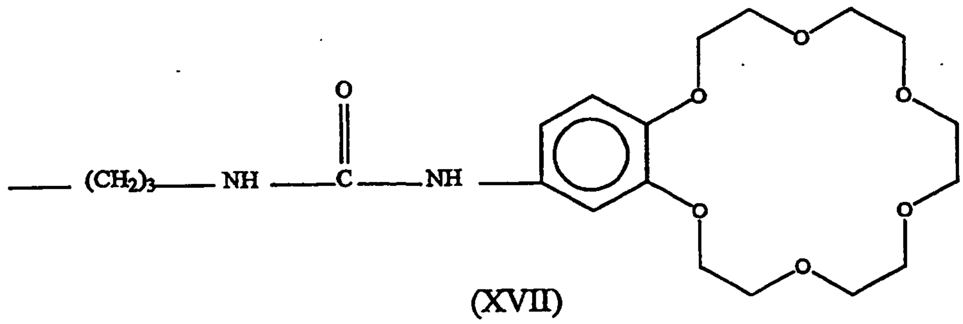

(XVII)

ou

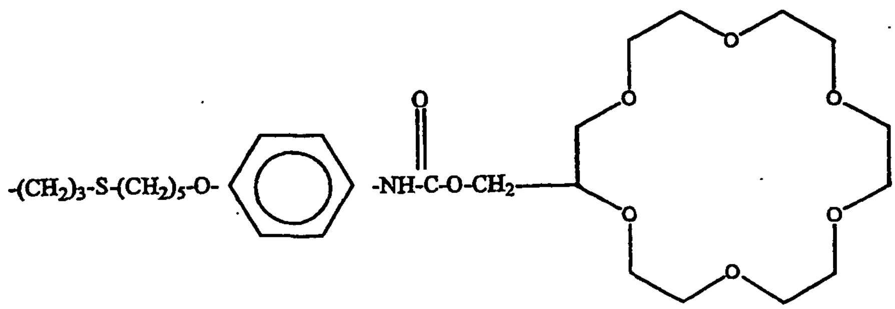

(XVIII)

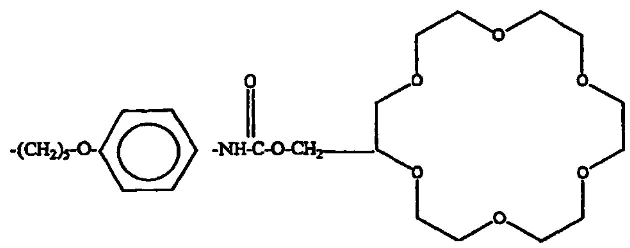

(XIX)

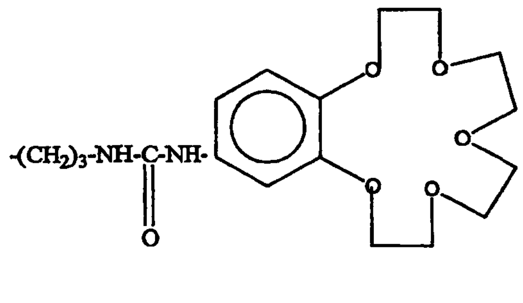

(XXI)

De tels supports peuvent être préparés par mise en contact d'une suspension du gel de silice dans une phase liquide organique, avec une solution dans un solvant organique d'un composé de formule (I) :

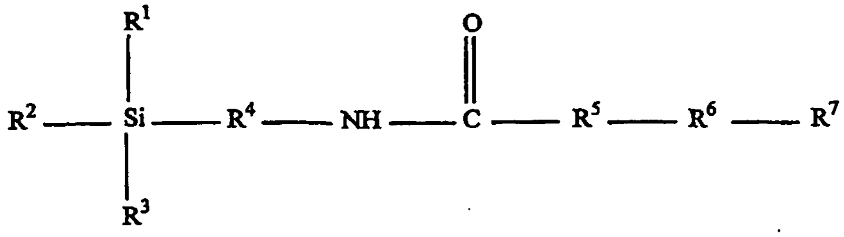 (I)

dans laquelle

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne.

Selon l'invention, la phase liquide organique est constituée de toluène, de xylène, d'un mélange pyridine-toluène, d'un mélange pyridine-xylène, d'un mélange pyridine-heptane, d'un mélange pyridine-xylène-eau, d'un mélange pyridine-toluène-eau, ou d'un mélange pyridine-heptane-eau.

De préférence, on utilise une phase liquide organique contenant de l'eau.

En effet, on a constaté, qu'en présence d'eau, et malgré l'encombrement stérique induit par le volume de la cage d'un éther-couronne, il était possible d'obtenir des taux de greffage, calculés à partir des résultats de microanalyses, dépassant largement les maximums connus jusqu'alors et ne pouvant s'expliquer que par une "greffe polymère" particulièrement performante. La notion de greffe polymère a été explicitée par Rosset, R., Claude, M., Jardy, A, dans l'ouvrage "Chromatographies en phase liquide et supercritique", 3ième édition, 1991, éditée chez Masson, 120 Boulevard Saint-Germain, 75280 Paris Cedex 06, pages 290 à 299 [11]. En particulier la réaction de polymérisation de silanes trifonctionnels, en présence d'eau, sur du gel de silice conduit à la formation des groupes suivants de formules (XX) ou (XXI) :

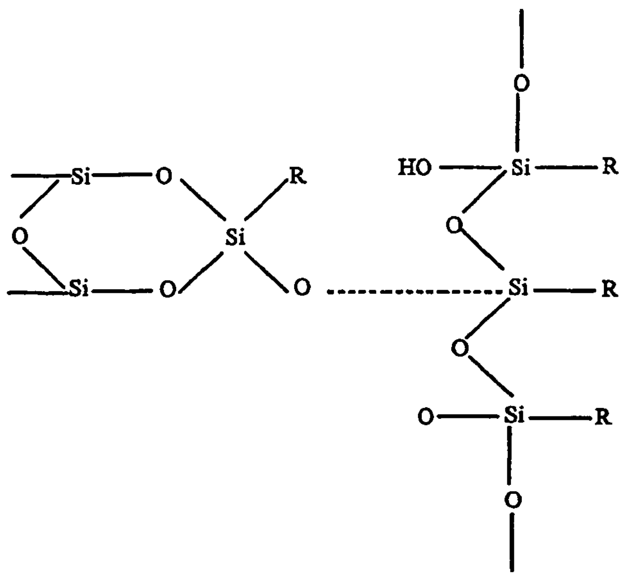 (XX)

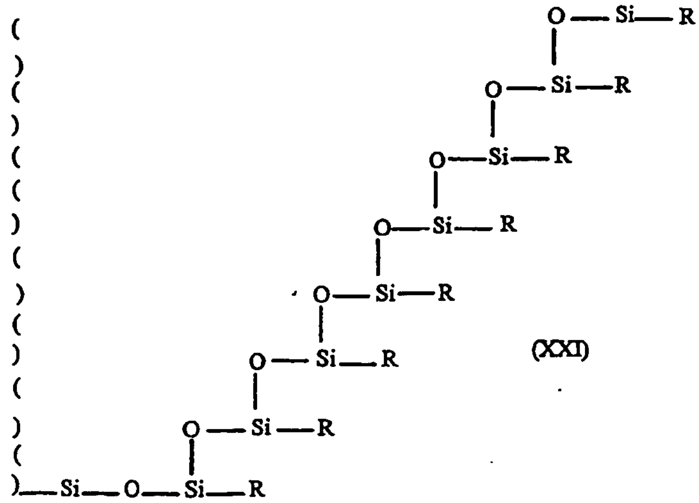

(XXI)

dans lesquelles R représente le groupe de formule (XVI).

A la page 293 du document [11], il est indiqué que l'on obtient un taux de carbone maximal de 10% pour une greffe polymère à base d'octadécylsilane, correspondant à une densité moyenne de greffage de 1 à 2 μmol/$m^2$ (page 290, figure IX-6 du même ouvrage). De manière surprenante, les inventeurs ont constaté qu'en utilisant un silane trifonctionnel, en présence d'eau, et en menant la réaction de silanisation de la silice en une seule étape, les taux de greffage obtenus pouvaient dépasser largement 0,5 mmole d'éther-couronne benzo-15-C-5 par gramme de silice, ce qui, en fonction des caractéristiques de l'éther-couronne et de la silice de départ, permettait d'obtenir des taux de carbone (calculés par microanalyse) très supérieurs à 12%, et même jusqu'à 20% et plus, et correspondant à des taux de recouvrement de l'ordre de 3,2 à 3,8 μmole d'éther-couronne benzo-15-C-5 par $m^2$ de gel de silice.

Des méthodes de greffage de composés de silicium sur du gel de silice ont été décrites dans l'ouvrage de Scott, R.P.W., "Silica gel and bonded phases : their production, properties and use in LC", édité chez Wiley & Sons Ldt., 1993, pages 140-175 [12].

Pour ce greffage, le toluène ou les xylènes, du fait de leurs hauts points d'ébullition respectifs (110°C et 138-140°C), sont préconisés comme solvants réactionnels. Les auteurs recommandent de sécher la silice à 250°C pendant 2 heures pour éliminer l'eau présente puis de la disperser (10 g dans 100 ml de toluène) avec du toluène séché sur sodium. Un léger excès de silane par rapport à la stoechiométrie calculée sur le nombre de silanols présents sur la silice (informations généralement donnée par les fournisseurs) est utilisé. Pour 10 g de silice, 5 ml de pyridine sont nécessaires pour dissoudre le silane, la pyridine étant également utilisée pour neutraliser l'acide chlorhydrique libéré pendant la réaction. La solution pyridine/silane est coulée à froid sur la suspension silice/toluène en environ 15' puis la masse réactionnelle est portée à reflux pendant 5 heures. Elle est ensuite filtrée puis lavée séquentiellement par du toluène, tétrahyfurane, méthanol, méthanol/eau 50/50 (en volume), méthanol puis séchée.

Les mêmes auteurs recommandent une procédure légèrement différente si le silane mis en oeuvre est un alkoxy silane (et plus généralement méthoxy ou éthoxysilane). La pyridine n'est plus utilisée (car il n'y a plus d'HCl à piéger) et les trois matières premières (10 g de silice, 100 ml de toluène et un léger excès d'alkoxysilane) sont mélangées puis portées à reflux pendant 5 heures avec un réacteur comportant une colonne à distiller. L'éthanol ou le méthanol formé pendant la réaction de silanisation, est éliminé au fur et à mesure par distillation à pression atmosphérique. Les lavages sont ensuite mis en oeuvre selon une procédure identique à celle décrite pour l'utilisation d'un chlorosilane.

Selon l'invention, afin d'obtenir des taux de greffage supérieurs à ce que l'on obtient avec ces méthodes, on préfère utiliser comme composé de silicium de formule (I), un trialcoxysilane ($R^1$, $R^2$ et $R^3$ étant des groupes alcoxy) à haute température, en utilisant de préférence une phase liquide comprenant des proportions variables de pyridine, et de l'eau. En effet, l'emploi de pyridine qui est un solvant à caractère basique permet, de façon surprenante et contre toute attente, de favoriser la réaction de silanisation.

A titre d'exemple, on peut réaliser le greffage en milieu basique de la façon suivante. On met en suspension 100 g de silice ayant par exemple une surface spécifique de 300 $m^2$/g dans une phase liquide constituée par un mélange xylène/pyridine/eau, par exemple 600 ml de xylène, 600 ml de pyridine et 9,72 g d'eau, soit 5,4 mmole d'eau par g de silice, et on porte l'ensemble à 90°C. On y ajoute le composé de formule (I), à raison par exemple de $180.10^{-3}$ mole, soit 1,8 mmole d'éther-couronne-silane par g de silice. On porte la suspension réactionnelle pendant 24 h sous un faible reflux, puis on filtre la masse réactionnelle, on la lave et on la sèche.

On peut aussi réaliser un greffage en milieu acide, par exemple dans une phase liquide de 1,4-dioxane en présence d'acide chlorhydrique, en opérant de la façon suivante.

5 g de silice de surface spécifique 300 $m^2$/g sont mis en suspension dans 110 ml de 1,4-dioxane avec 5,75 ml d'acide chlorhydrique 2,3 N, et 9 mmoles (soit 4,77 g de silane de masse molaire 530,70) de silane de formule générale (I) en solution dans 30 ml de 1,4-dioxane sont additionnés et la suspension réactionnelle est portée à reflux pendant 24 heures. La suspension est refroidie, puis filtrée, lavée et séchée.

Les supports à base de gel de silice de l'invention sont particulièrement utiles pour la séparation par chromatographie de cations ou de molécules comportant des fonctions amines.

Dans ce cas, on complexe les fonctions amine des molécules par un acide minéral ou organique, par exemple l'acide perchlorique, et le mécanisme de séparation met en jeu des constantes de complexation différentes des fonctions ammonium $NH_3^+$ pour chaque aminoacide.

On choisit bien entendu le groupe $R^7$ dérivé d'éther-couronne en fonction des cations ou des molécules à séparer.

La séparation chromatographique peut être effectuée par chromatographie liquide à haute performance suivant les règles habituellement utilisées pour cette technique.

D'autres caractéristiques et avantages de l'invention apparaîtront mieux à la lecture de la description qui suit, donnée bien entendu à titre illustratif et non limitatif, d'exemples de réalisation conformes à l'invention, en référence aux dessins annexés.

## Brève description des dessins

Les figures 1 et 2 sont des chromatogrammes illustrant la séparation des aminoacides suivants :

phénylalanine/ghénylglycine (fig. 1)
phénylalanine/ester éthylique de la phénylalanine (fig. 2).

La figure 3 est un chromatogramme illustrant la séparation des cations Li et Na.

## Exposé détaillé d'exemples de réalisation

### Exemple 1 : Synthèse du 4-[3-triéthoxysilyl)propyl] uréidobenzo-18-couronne-6 de formule (IXa) :

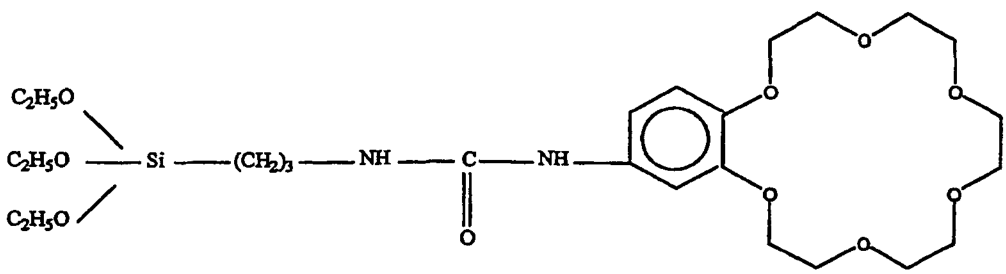

(IXa)

31,43 g de 4'-aminobenzo-18-couronne-6 à 97% (référence Aldrich 44,402-2, $M_R$=327,38), soit 96 mmoles, sont mis en solution dans 460 ml de chlorure de méthylène. 26,12 g de 3-(triéthoxysilyl)-propyl isocyanate (Aldrich référence 41,336-4, $M_R$=247,37), soit 105,6 mmoles, correspondant à 10% d'excès par rapport à l'éther-couronne, sont additionnés et le milieu réactionnel est agité 48 heures à température ambiante. La solution est ensuite mise à sec par évaporation au bain-marie à 40°C sous vide jusqu'à poids constant. On obtient 58 g du composé (IXa). Le rendement est supérieur à 100% car le silane est utilisé en excès.

### Exemple 2 : Synthèse du 4-(3-triméthoxysilylpropylthiopentyloxyphényl)-carbamatométhyl-18-couronne-6 de formule (XIIIa) :

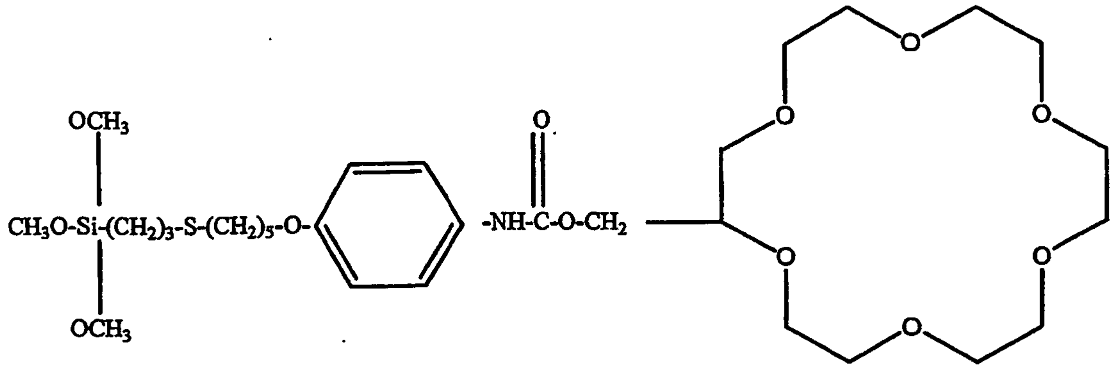

$C_{31}H_{55}O_{12}N$, SSi $M_R$= 693,93

(XIIIa)

1) Synthèse du 4-(pent-4-énoxy)-phénylisocyanate de formule (XXII) :

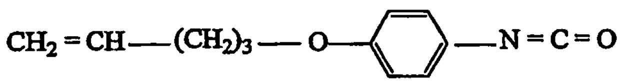

$C_{12}H_{13}NO_2$ $M_R$=203,24

(XXII)

a) Préparation de l'acide parapent-4-énoxybenzoïque :

Dans un réacteur, on place successivement 2 g d'hydroxyde de sodium, 15 ml d'eau distillée, 7,6 g de 4-hydroxybenzoate de méthyle, 0,16 g de bromure de tétrabutylammonium et 5,92 ml de 5-bromopent-1-ène. Une agitation vigoureuse est maintenue à température ambiante pendant 12 heures. Après avoir ajouté 30 ml d'une solution d'hydroxyde de sodium 2,5 M, le milieu réactionnel est chauffé à 60-80°C pendant 90 minutes. Il est ensuite dilué avec 120 ml d'eau distillée et extrait avec deux fois 50 ml d'éther diéthylique. La phase aqueuse est acidifiée avec 10 ml d'acide chlorhydrique concentré pour permettre la précipitation de l'acide. Après filtration, lavage à l'eau distillée puis séchage dans un dessicateur sur $P_2O_5$, l'acide est obtenu avec un rendement de 93%.

b) Préparation du chlorure d'acide de l'acide parapent-4-ènoxybenzoïque :

10,3 g d'acide parapent-4-ènoxybenzoïque sont mis en suspension dans 60 ml de toluène auquel on ajoute 17 ml de chlorure de thionyle. Le mélange réactionnel est chauffé à reflux pendant 30 minutes puis évaporé sous vide. Le résidu obtenu est distillé sous vide (110°C/1 mm de Hg (133,3 Pa)). Le rendement de cette synthèse est de 85%.

c) Préparation du parapent-4-ènoxybenzoylazide

A une solution aqueuse d'azoture de sodium (3,9 g dans 22 ml d'eau distillée), on ajoute goutte à goutte une solution de 11,27 g de chlorure de parapent-4-énoxybenzoyle dissous dans 15 ml d'acétone à température ambiante en maintenant une agitation vigoureuse. A la fin de l'addition, le milieu réactionnel est agité pendant une heure puis dilué avec 50 ml d'eau. Après décantation, l'huile incolore obtenue est séchée sur sulfate de magnésium (rendement=80%).

d) Préparation du parapent-4-èncxphénylisocyanate :

11,6 g de parapent-4-ènoxybenzoylazide sont mis en solution dans 80 ml de toluène anhydre puis portés à reflux pendant 90 minutes. Le solvant est ensuite évaporé sous vide et le résidu qui se présente sous l'aspect d'une huile incolore est distillé sous vide (100°C/1 mm de Hg (133,3 Pa)). Le rendement de cette synthèse est de 94%.

2) Synthèse du 2-[4 (pent-4-ènoxy) phénylcarbamatométhyl]-18-couronne-6 de formule (Xb) :

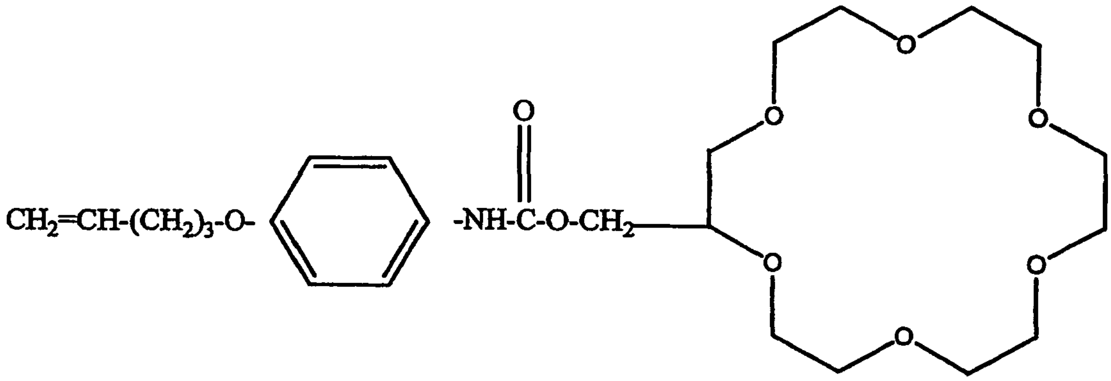

$C_{25}H_{39}O_9N$ $M_R$= 467,59

(Xb)

8,13 g du composé (XXII) synthétisé précédemment, soit 40 mmoles, sont mis en solution dans 80 ml de tétrahydrofurane anhydre. 40 mmoles de 2-(hydroxyméthyl)-18-couronne-6 (Aldrich référence 38 440-0, $C_{13}H_{26}O_7$, $M_R$=294,35) soit 11,77 g, préalablement dissous dans 110 ml de tétrahydrofurane sont additionnés et la masse réactionnelle est agitée pendant 48 heures entre 20 et 30°C. Le milieu est ensuite mis à sec par évaporation sous vide, bain-marie à 40°C jusqu'à poids constant. Le rendement est quantitatif. On obtient 20 g du composé (Xb). Il est utilisé tel quel dans l'étape suivante.

3) Addition anti-Markonikov du silanethiol :

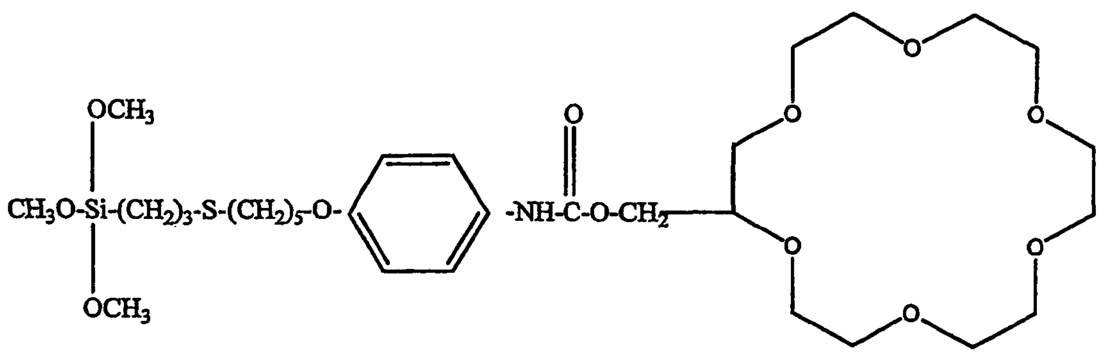

$C_{31}H_{55}O_{12}N$, SSi $M_R$= 693,93

(XIIIa)

20 g ou 40 mmol du composé (Xb) synthétisé en 2-2, sont mis en solution dans 20 ml de chloroforme. 7,85 g (40 mmoles) de (3-mercaptopropyl)triméthoxysilane (Aldrich référence 13,561-7 -$C_6H_{16}O_3SSi$ $M_R$=196,34) préalablement dissous dans 30 ml de chloroforme sont ajoutés et la solution est portée à reflux pendant 5 jours. 20 mg de peroxyde de benzoyle sont additionnés toutes les 20 heures environ. Le milieu réactionnel est ensuite mis à sec par évaporation sous vide jusqu'à poids constant. Le rendement est quantitatif. On obtient 29 g du composé (XIIIa).

**Exemple 3 : synthèse du 2-[4-(5-trichlorosilylpentyloxy)-phenylcarbamatométhyl]-18-couronne-6 de formule (XIIIb) :**

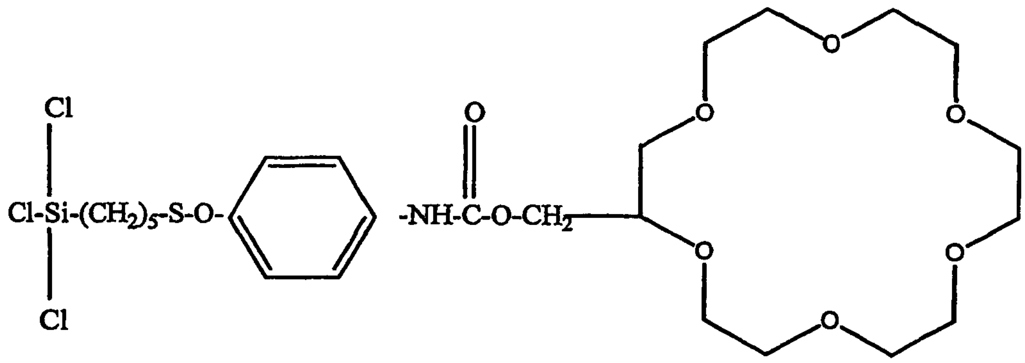

$C_{25}H_{40}O_9NCl_3Si$ $M_R = 633,04$ (XIIIb)

49,8 g du composé (Xb) (synthétisé dans l'exemple 2-2) (100 mmoles) sont dissous dans 200 ml de diméthylformamide anhydre, préalablement séché sur sodium. 13,54 g de trichlorosilane (Aldrich, référence 17,555-2, $SiHCl_3$, $M_R$=135,45, soit 100 mmoles, préalablement dissous dans 50 ml de DMF anhydre séché sur sodium sont additionnés sur la solution précédente. 0,4 g (1 mmole) d'acide hexachloroplatinique hydraté à 1 $H_2O$ (ou hydrogène hexachlotoplatinate (IV) hydrate, catalogue Aldrich 25,409-2, $M_R$=409,82, $H_2PtCl_61H_2O$) est additionné sur la masse réactionnelle qui est portée 60 heures à 80°C sous atmosphère d'argon. 0,4 g d'acide hexachloroplatinique est ajouté après 20 heures et 40 heures. Le milieu est refroidi puis filtré sur fritté n°3 sous argon.

La disparition des doubles liaisons éthyléniques portées par le composé (Xb) synthétisé dans l'exemple 2-2) de départ est suivi par spectrométrie infrarouge.

Le filtrat est maintenu sous argon à l'abri de l'air et de l'humidité. On obtient 63,30 g, 100 mmoles de composé (XIIIb).

Les exemples 4, 5 et 6 qui suivent, illustrent la préparation de supports à base de gel de silice greffés par le composé (IXa), le composé (XIIIa) et le composé (XIIIb).

**Exemple 4 : Préparation d'un support à base de gel de silice greffé par le composé (IXa)**

5 g de gel de silice (particules sphériques de diamètre 40 à 63 pm, de surface spécifique 300 $m^2/g$ et de diamètre de pore de 120 *Å*) préalablement traités à l'acide chlorhydrique à reflux, sont mis en suspension dans 50 ml de 1,4-dioxane. 9 mmoles (correspondant à 1,8 mmole de composé (IXa)/g de silice), soit 5,44 g, du composé (IXa) synthétisé dans l'exemple 1 préalablement dissous dans 50 ml de 1,4-dioxane sont additionnés sur la suspension de gel de silice. 5,4 mmoles d'eau par gramme de silice, ou 27 mmoles, soit 486 µl sont additionnés sur la masse réactionnelle, ainsi qu'1 ml d'HCl, soit 12 mmoles ou 2,4 mmoles par gramme de silice La suspension réactionnelle est portée 48 heures à reflux. Elle est ensuite refroidie puis filtrée sur fritté n°3. Le précipité est lavé par 100 ml de méthanol, 100 ml de triéthylamine, 100 ml d'eau puis 2 fois 100 ml d'acétone. Le précipité est séché à 80°C, en étuve sous vide, jusqu'à poids constant.

On obtient 7,19 g de gel de silice (poids sec).

Le gain de masse $\Delta M$ est de 0,77 g.

Le % de carbone en microanalyse élémentaire est de 15,25%, soit 0,71 mmole de composé (IXa) par g de silice.

**Exemple 5 : Préparation d'un support à base de gel de silice greffé par le composé (XIIIa)**

40 g de gel de silice (particules sphériques de diamètre 20 à 40 µm, de surface spécifique 300 $m^2/g$ et de diamètre de pore de 120 *Å*) préalablement traités à l'acide chlorhydrique, ou à l'acide nitrique, à reflux, sont mis en suspension dans un mélange pyridine/heptane 235 ml/32,5 ml. La suspension est ensuite portée à reflux de l'azéotrope ternaire pyridine/heptane/eau et 100 ml de condensat sont distillés à l'aide d'une colonne munie d'une tête de reflux et d'un système de fractionnement. 50 g (72 mmoles ou 1,8 mmole du composé (XIIIa) par g de silice) du composé (XIIIa) de l'exemple 2, préalablement dissous dans 300 ml de toluène sont additionnés sur la suspension réactionnelle. La masse réactionnelle est portée à reflux pendant 48 heures tout en distillant 150 ml de condensat. 3,9 g d'eau (soit 5,4 mmoles d'eau/g de silice)

sont additionnés sur la masse réactionnelle après refroidissement vers 90-95°C. Le milieu réactionnel est agité 48 heures supplémentaires à 90-95°C. Il est ensuite refroidi puis filtré sur fritté n°3. L'insoluble est lavé par 300 ml de méthanol, puis par 300 ml d'eau, puis par deux fois 200 ml d'acétone. Il est ensuite mis à sécher à 80°C sous vide en étuve.

On obtient 80,0 g de gel de silice (poids sec). Le gain de masse est de 40,0 g. Le % de carbone en microanalyse élémentaire est de 26,54%. La quantité en mmoles de composé (XIIIa) par g de support est de 0,79 mmol/g (calculée en microanalyse).

**Exemple 6 : Préparation d'un support à base de gel de silice greffé par le composé (XIIIb)**

Le filtrat obtenu dans l'exemple 3 est mis sous agitation puis 55,5 g de gel de silice (particule sphérique de diamtre 5 pm, surface spécifique 300 $m^2$/g et diamètre de pore de 120 Å) sont additionnés (1,8 mmole de composé (XIIIb)/g de silice). 100 ml de pyridine sont additionnés. La masse réactionnelle est portée à reflux pendant 48 heures. 2,4 mmoles d'eau/g de silice, soit 2,4 g, sont ajoutés sur la masse et le reflux est à nouveau maintenu 48 heures. Le milieu réactionnel est filtré sur fritté n°3 puis lavé par 500ml de méthanol, 500 ml d'eau puis deux fois 500 ml d'acétone. Le solide est séché à 80°C sous vide jusqu'à poids constant.

On obtient 102 g de gel de silice (poids sec).

Le gain de masse est de 46,5 g.

Le % de carbone d'après la microanalyse est de 26, 08%.

Le taux de greffage d'après la microanalyse est de 0,87 mmol/g.

**Exemples 7 à 12 : Préparation de supports à base de gel de silice greffé par l'éther-couronne amino benzo 15C5**

Dans ces exemples, on suit le même mode opératoire que dans l'exemple 4, mais on utilise les quantités de gel de silice et du composé (XX), le 4-[3-triméthoxysylyl)propyl] uréidobenzo-15-couronne-5 de formule :

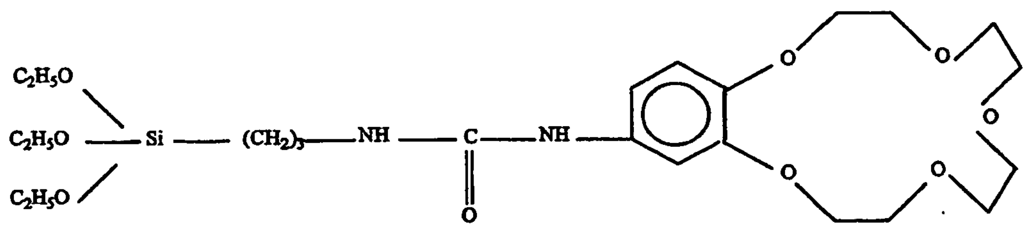

(XX)

ainsi que les solvants donnés dans le tableau 1.

Le composé (XX) est obtenu de la façon suivante :

27,2 g de 4'-aminobenzo-15-couronne-5 à 97% (référence Aldrich 39,342-8, $M_R$=283,33), soit 96 mmoles, sont mis en solution dans 345 ml de chloroforme. 26,12 g de 3-(triéthoxysilyl) propylisocyanate (Aldrich référence 41,336-4, $M_R$=247,37), soit 105,6 mmoles, correspondant à 10% d'excès par rapport à l'éther-couronne, sont additionnés et le milieu réactionnel est agité 48 heures à température ambiante. La solution jaune obtenue est mise à sec par évaporation au bain-marie à 40°C sous vide jusqu'à poids constant. On obtient 53,32 g du composé (XX). Le rendement est supérieur à 100% car le silane est utilisé en excès.

Les résultats obtenus pour la préparation des supports, soit le gain de masse, le % de carbone en microanalyse élémentaire et la quantité de composé greffé (en mmol/g de silice) sont donnés également dans le tableau 1.

Dans les exemples 7 à 12, les taux de greffage, exprimés en mmol de composé greffé par g de silice et calculés à partir des teneurs en carbone obtenu par microanalyse élémentaire, ont été obtenus selon la méthode de calcul indiquée par Rosset R. dans la référence [11], page 281.

**Exemple 13 : Séparation d'aminoacides**

On utilise le support obtenu dans l'exemple 6 (gel de silice greffé par le composé XIIIa) pour séparer la phénylalanine et la phénylglycine par chromatographie liquide à haute performance (HPLC). On opère de la façon suivante.

3 grammes du support de l'exemple 6 sont mis en suspension dans 20 ml d'éthanol et sont utilisés pour remplir

une colonne HPLC de dimensions internes 250 x 4,6 mm.

La colonne est ensuite rincée par 100 ml d'éthanol puis 100 ml d'eau. Elle est ensuite conditionnée dans la phase mobile suivante : eau + acide perchlorique $10^{-3}$M pendant 3 heures. La séparation est réalisée dans cette phase mobile en conditions isocratiques. La pression est de 8,1 MPa. Le mélange à séparer est la phénylalanine/phénylglycine (30/70% en poids), deux aminoacides de structure chimique proche et qui ne diffèrent que par un groupe méthylène.

Le débit est fixé à 1 ml/min. La détection U.V. est réalisée à 254 nm. L'échelle de D.O. (densité optique) est de 0,5. Le système d'intégration utilise un micro ordinateur muni d'un logiciel d'intégration UNIPOINT (Gilson). Les résultats sont donnés dans le tableau 2.

**Tableau 2**

| Composé | Temps de rétention (min) | % Aire | Facteur de sélectivité α |
|---|---|---|---|
| Phénylalanine | 9,81 | 29,9 | |
| Phénylglycine | 23,88 | 70,1 | 3,07 |

L'injection est de 10 μl avec une solution à 1% dans la phase mobile.

Le chromatogramme est reproduit sur la figure 1.

**Exemple 14 : Séparation d'aminoacides**

On suit le même mode opératoire que dans l'exemple 13 sauf pour le débit qui est fixé à 2 ml/min, pour séparer un mélange de phénylalanine/ester éthylique de phénylalanine (35/65% en poids).

Les résultats sont donnés dans le tableau 3.

**Tableau 3**

| Composé | Temps rétention (min) | % Aire | Facteur de sélectivité α |
|---|---|---|---|
| Phénylalanine | 4,50 | 36 | |
| ester éthylique de phénylalanine | 9,49 | 64 | 2,66 |

La figure 2 illustre le chromatogramme obtenu.

Les résultats des exemples 13 et 14 montrent que le support de l'exemple 6, conforme à l'invention, permet d'obtenir une séparation satisfaisante des aminoacides.

**Exemple 15 : Séparation de cations**

3 grammes du support de l'exemple 7 sont mis en suspension dans 20 ml d'éthanol et sont utilisés pour remplir une colonne d'HPLC de dimensions internes 250 x 4,6 mm par la méthode dite de la voie humide sous 70 MPa (700 bars) de pression. La colonne est mise à rincer avec 100 ml d'eau puis 100 ml d'éthanol. Un gradient d'élution est réalisé en 30' de 100% d'éthanol anhydre à 100% d'eau après injection. Les conditions d'injection sont les suivantes : 20 μl d'une solution LiCl + NaCl (66/34% en poids) à 1% dans l'eau. La détection est effectuée à l'aide d'un détecteur à évaporation et à diffusion de la lumière (DEDL Sedex 45 de la marque SEDERE-Alfortville - France), les conditions étant les suivantes : pression d'air sur le détecteur 0,22 MPa (2,2 bars), température d'évaporation 50°C, débit 1 ml/min.

Le chromatogramme obtenu est reproduit sur la figure 3 avec les données brutes d'intégration (intégrateur spectrophysics SP4290) :

| Composé | Temps rétention $T_R$ (minutes) | % Aire | Facteur de capacité k' | Sélectivité α $T_{R2}/T_{R1}$ |
|---|---|---|---|---|
| LiCl | 10,0 | 66,02 | 2,33 | |
| NaCl | 15,7 | 33,98 | 4,23 | 1,81 |

Le temps de rétention nulle $T_o$ a été déterminé par injection d'une solution d'azoture de sodium. Il est de 3,0 min en moyenne. Le facteur de capacité k' est déterminé expérimentalement par la relation: $k' = \frac{T_R - T_0}{T_0}$.

**Tableau 1**

| Ex. | Masse de silice (g) | mmol de composé (XX) par g de silice | Solvant | ΔM gain de masse (g) | mmol de composé (I) greffé/g de silice (calculé sur ΔM) | % de C (microanalyse élémentaire) | mmol de composé (I) greffé par g de silice (calculé sur %C de microanalyse) |
|---|---|---|---|---|---|---|---|
| 7 | 5 | 1,2 | Toluène | 0,8 | 0,36 | 11,40 | 0,50 |
| 8 | 5 | 1,2 | Xylène | 1,0 | 0,46 | 11,49 | 0,55 |
| 9 | 100 | 1,2 | pyridine/toluène | 21,92 | 0,5 | 11,22 | 0,51 |
| 10 | 100 | 1,8 | pyridyne/xylène | 30,34 | 0,69 | 15,08 | 0,70 |
| 11 | 40 | 1,8 | pyridyne/xylène/eau | 15,32 | 0,87 | 17,05 | 0,79 |
| 12 | 5 | 1,8 | 1,4-dioxane/HCl | 2,19 | 0,77 | 15,25 | 0,71 |

## REFERENCES CITEES

[1] J. Am. Chem. Soc., 97, 1975, p. 1259-1261
[2] Anal. Chem., 55, 1983, p. 463-467
[3] Bull. Chem. Soc. Jpn, 56, 1983, p. 3052-3056
[4] Bull. Chem. Soc. Jpn, 59, 1986, p. 1475-1480
[5] Anal. Chem., 68, 1996, p. 2811-2817
[6] "Advanced Organic Chemistry" $4^{th}$ edition, 1992, p. 891-903, publié par John Wiley and Sons
[7] US-A-4 518 758
[8] Tetrahedron Lett. 26, 1985, p. 3361-3364
[9] New J. Chem. 13, 1989, p. 625-637
[10] Chromatographia, vol. 25, n°4, 1988, pages 265-271
[11] Roaset, R., Claude, M., Jardy, A, dans l'ouvrage "Chromatographies en phase liquide et supercritique", 3ième édition, 1991, éditée chez Masson, 120 Boulevard Saint-Germain, 75280 Paris Cedex 6, pages 290 à 299
[12] Scott, R.P.W., "Silica gel and bonded phases : their production, properties and use in LC", édité chez Wiley & Sons Ldt., 1993, pages 140-175
[13] Tetrahedron: Asymmetry, 10, 1999, p.2087-2099
[14] F. Chromatogr. A, 857, 1999, p. 145-155
[15] Tetrahedron : Asymmetry, 11, 2000, p.2375-2385

## Revendications

**1.** Composé répondant à la formule (I) :

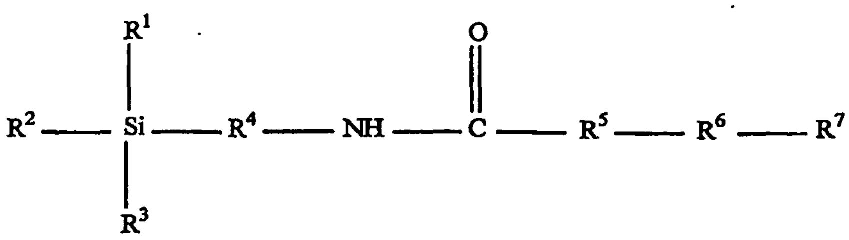

(I)

dans laquelle :

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hdyrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne.

**2.** Composé selon la revendication 1, dans lequel $R^1$, $R^2$ et $R^3$ représentent le groupe méthoxy ou le groupe éthoxy.

**3.** Composé selon la revendication 1, dans lequel $R^1$, $R^2$ et $R^3$ représentent le chlore.

**4.** Composé selon la revendication 1, dans lequel le groupe hydrocarboné de 1 à 20 atomes de carbone est un groupe alkylène, arylène, alkylarylène, arylalkylène, substitué ou non substitué, comportant éventuellement un ou plusieurs hétéroatomes choisis parmi O, S, N et Si.

**5.** Composé selon la revendication 4, dans lequel $R^4$ est un groupe alkylène de formule $-(C_2)_n-$ avec n étant un nombre

entier allant de 1 à 20.

**6.** Composé selon la revendication 4, dans lequel $R^4$ est un groupe de formule (II) :

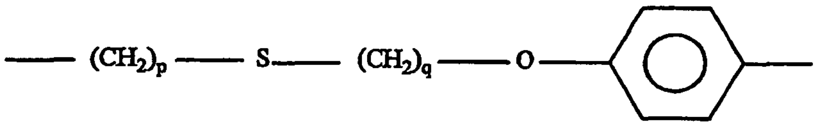
(II)

dans laquelle p et q sont des nombres entiers, identiques ou différents, tels que p+q ≤14.

**7.** Composé selon la revendication 1, dans lequel $R^6$ est une simple liaison ou un groupe méthylène.

**8.** Composé selon la revendication 1, dans lequel $R^7$ est un groupe dérivé d'un éther-couronne répondant à l'une des formules suivantes :

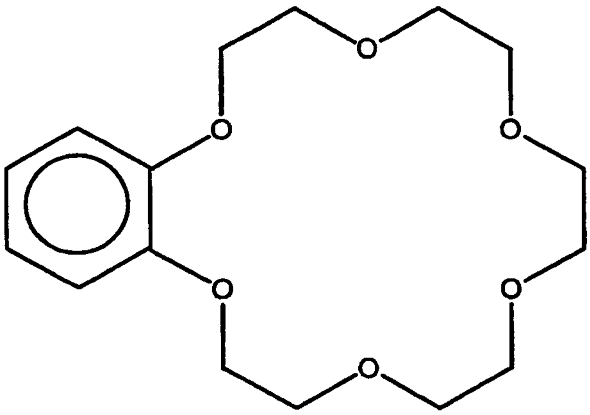
(IIIa)

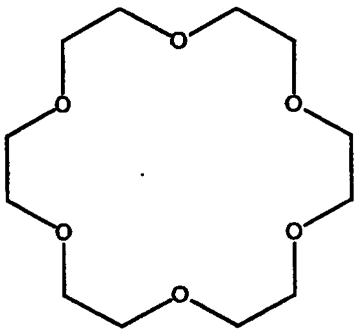
(IIIb)

27

**9.** Composé choisi parmi les composés de formule :

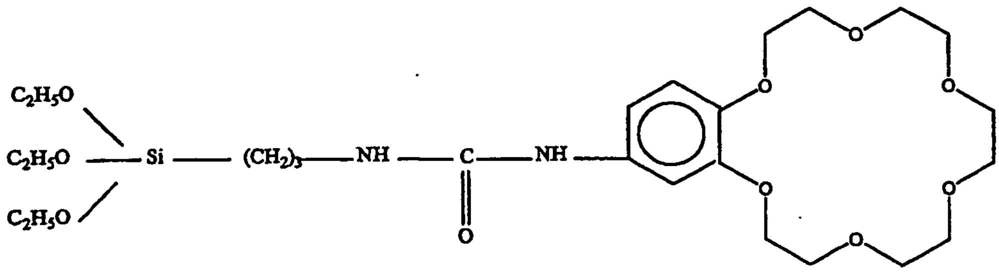

(IXa)

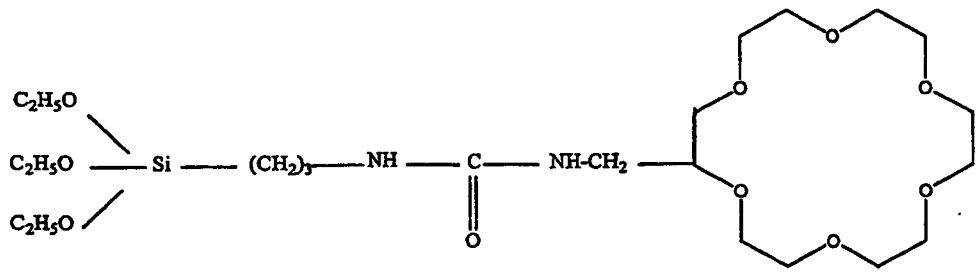

(IXb)

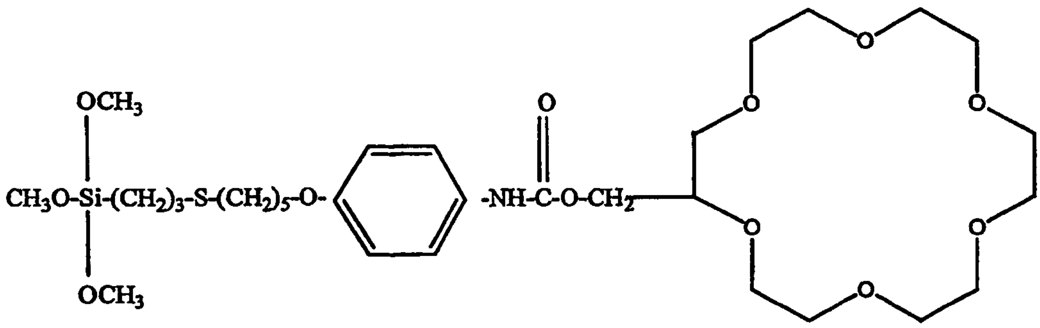

$C_{31}H_{55}O_{12}N, SSi$ $M_R = 693,93$ (XIIIa)

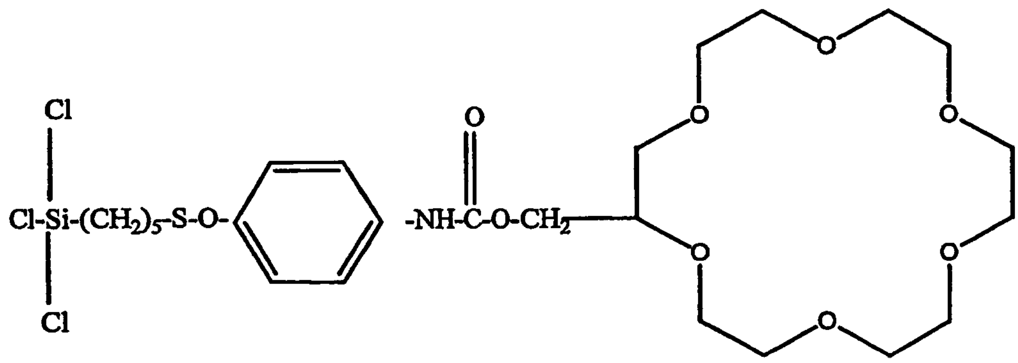

$C_{25}H_{40}O_9NCl_3Si$ $M_R = 633,04$ (XIIIb)

**10.** Procédé de préparation d'un composé de formule :

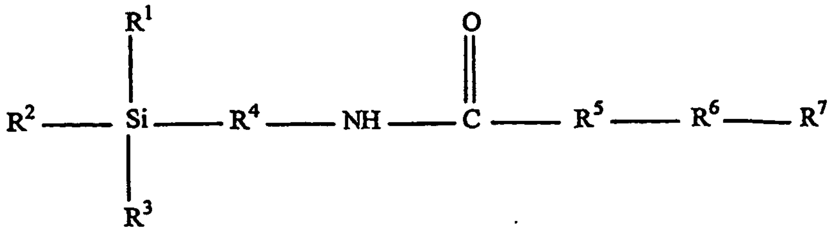 (I)

dans laquelle

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne,

qui comprend la réaction d'un isocyanate de formule (IV):

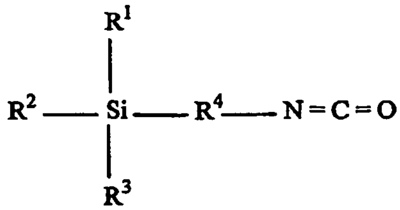 (IV)

dans laquelle $R^1$, $R^2$, $R^3$ et $R^4$ sont tels que définis ci-dessus, avec une amine de formule $R^7R^6\text{-}NH_2$ (V) dans laquelle $R^6$ et $R^7$ sont tels que définis ci-dessus.

**11.** Procédé de préparation d'un composé de formule (I) :

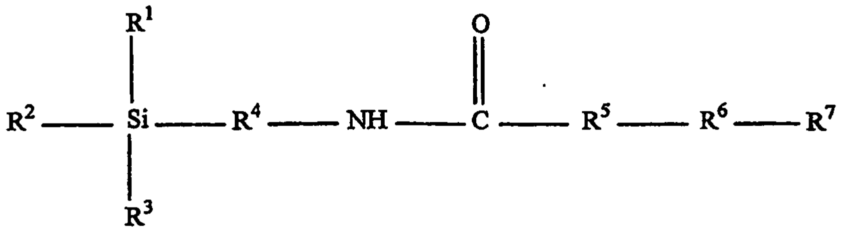 (I)

dans laquelle

- $R^1$, $R^2$ et $R^3$ qui peuvent être identiques ou différents, représentent un atome d'halogène ou un groupe alcoxy de 1 à 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et

- $R^7$ représente un groupe dérivé d'un éther-couronne,

qui comprend la réaction d'un isocyanate de formule (IV) :

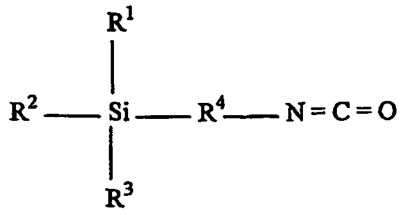

(IV)

dans laquelle $R^1$, $R^2$, $R^3$ et $R^4$ sont tels que définis ci-dessus, avec un alcool de formule $R^7R^6OH$ (VI) dans laquelle $R^6$ et $R^7$ sont tels que définis ci-dessus.

**12.** Procédé de préparation d'un composé de formule (I) :

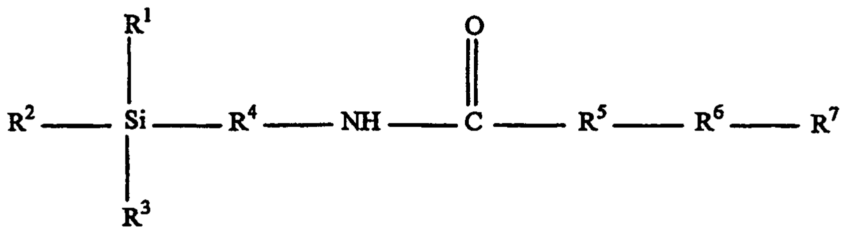

(I)

dans laquelle

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne,

qui comprend la réaction d'un composé de formule (X) :

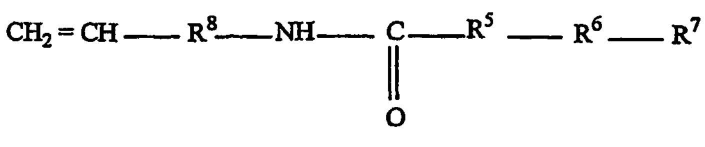

(X)

dans laquelle $R^5$, $R^6$ et $R^7$ sont tels que définis ci-dessus, et $R^8$ représente un groupe hydrocarboné de 1 à 18 atomes de carbone, substitué ou non substitué, comprenant éventuellement dans sa chaîne un ou plusieurs hétéroatomes choisis parmi S, O, N et Si,
avec un composé de formule (XI) :

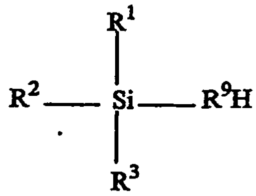

(XI)

dans laquelle $R^1$, $R^2$ et $R^3$ sont tels que définis ci-dessus, et $R^9$ est une simple liaison ou un groupe de formule $-(CH_2)_t-S-$ avec t étant un nombre entier allant de 1 à 9, $R^8$ et $R^9$ étant tels que l'ensemble $R^9-(CH_2)_2-R^8-$ correspond au groupe $R^4$.

**13.** Procédé selon la revendication 10, dans lequel l'isocyanate répond à la formule (VII) :

$$(C_2H_5O)_3\ Si—(CH_2)_3—N{=}C{=}O \qquad (VII)$$

et l'amine répond à la formule :

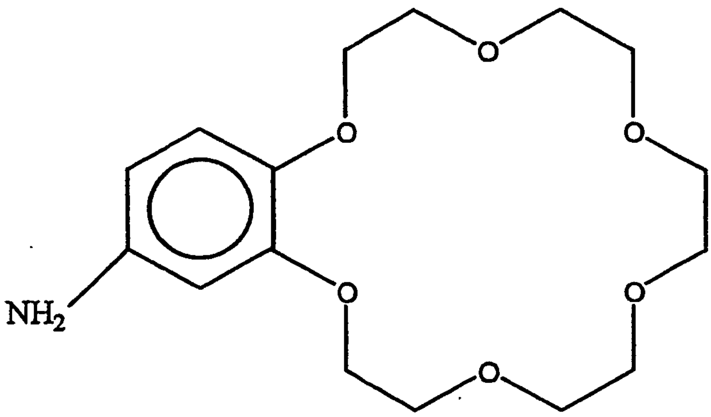

(VIIIa)

**14.** Procédé selon la revendication 12 de préparation du composé de formule (XIIIa) :

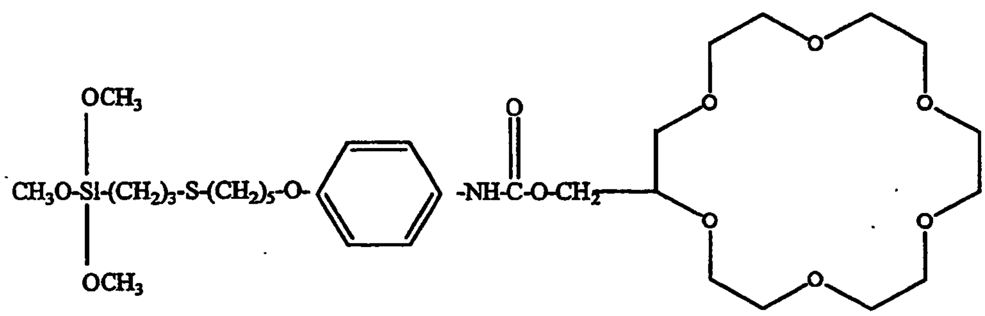

$C_{31}H_{55}O_{12}N, SSi$ $M_R = 693,93$

(XIIIa)

dans lequel on fait réagir le composé de formule (Xb) :

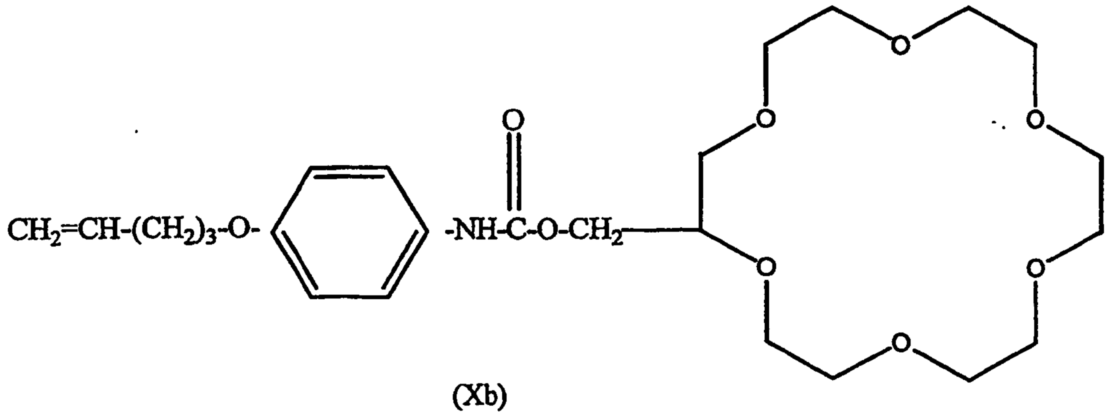

(Xb)

avec le composé de formule (XVa) :

$$(CH_3O)_3—Si—(CH_2)_3—SH \qquad (XVa)$$

**15.** Procédé selon la revendication 12 de préparation du composé de formule (XIIIb) :

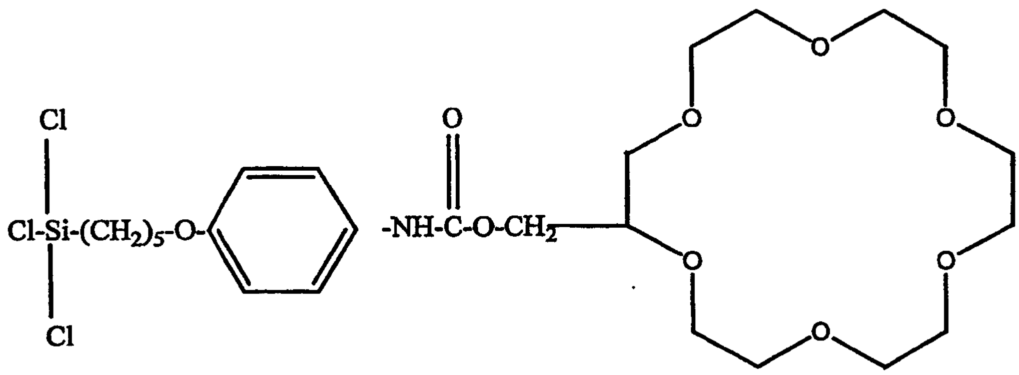

$C_{25}H_{40}O_9NCl_3Si$ $M_R$= 633,04 (XIIIb)

dans lequel on fait réagir le composé de formule (Xb) :

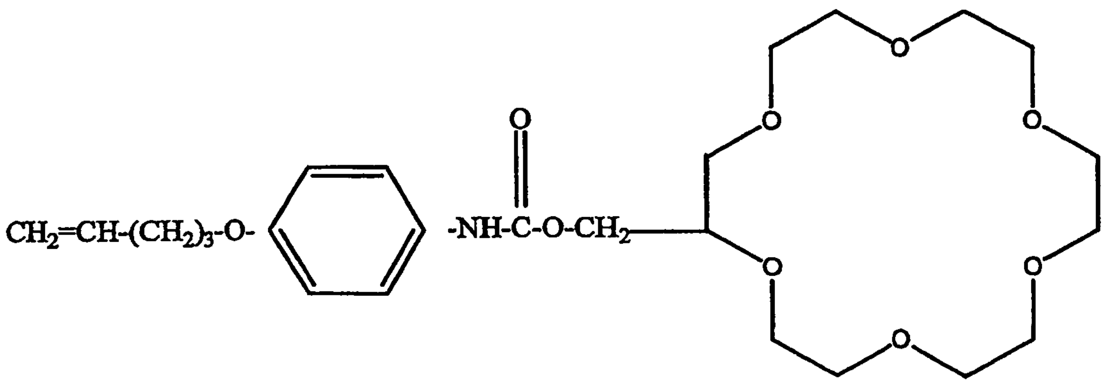

$C_{25}H_{39}O_9N$ $M_R$= 467,59 (Xb)

avec le composé de formule $Cl_3SiH$ (XVb).

**16.** Support à base de gel de silice, utile pour la séparation chromatographique, comportant des groupes de formule :

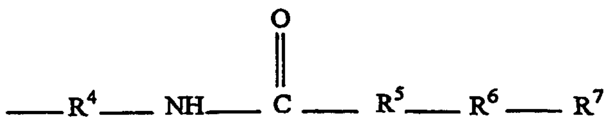
(XVI)

dans laquelle

- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ; et
- $R^7$ représente un groupe dérivé d'un éther-couronne,

greffés sur le gel de silice par au moins une liaison covalente comportant au moins un radical siloxane :

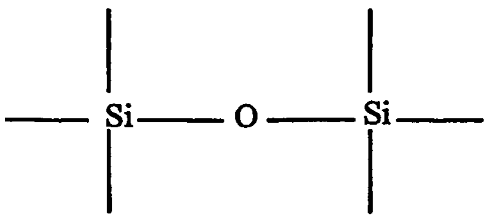

**17.** Support selon la revendication 16, dans lequel la densité en groupes greffés de formule (XVI) est d'au moins 0,5 mmol par g de support.

**18.** Support selon la revendication 16 ou 17, dans lequel les groupes greffés sur le gel de silice répondent à l'une des formules suivantes :

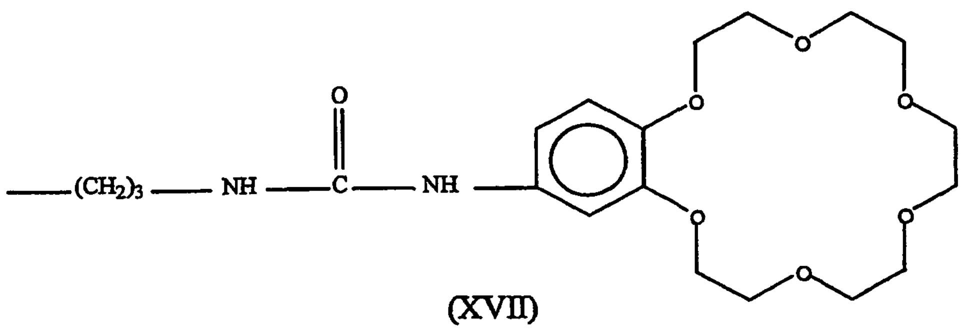
(XVII)

ou

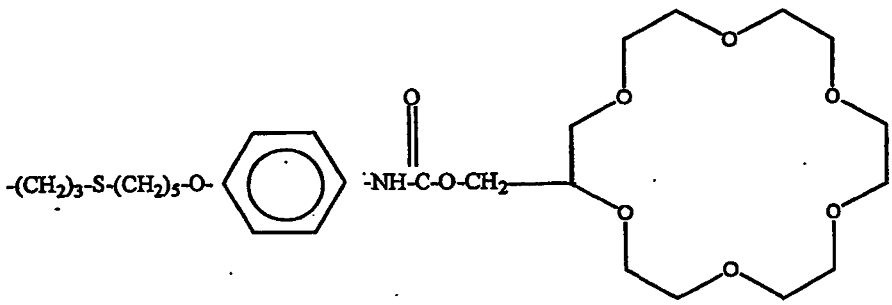

(XVIII)

ou

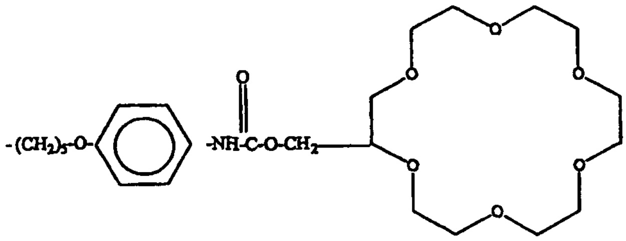

(XIX)

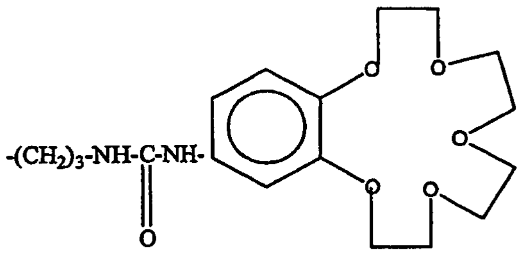

(XXI)

**19.** Procédé de fabrication d'un support en gel de silice greffé par des groupes de formule (XVI) :

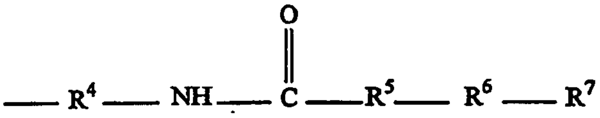

(XVI)

dans laquelle :

- $R^4$ représente un groupe hydrocarboné de 1 à 20 atomes de carbone, substitué ou non substitué; comportant éventuellement dans sa chaîne un ou plusieurs hétéroatomes choisis parmi S, O, N et Si ;

- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ;
- $R^7$ représente un groupe dérivé d'un éther-couronne,

qui consiste à mettre en contact une suspension du gel de silice dans une phase liquide organique, avec une solution dans un solvant organique d'un composé de formule (I) :

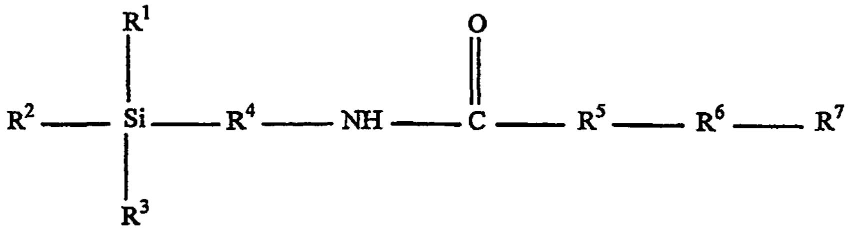
(I) ;

dans laquelle

- $R^1$, $R^2$ et $R^3$ qui peuvent être identiques ou différents, représentent un atome d'halogène ou un groupe alcoxy de 1 ou 2 atomes de carbone ;
- $R^4$ représente un groupe hydrocarboné de 1 à 20 atomes de carbone, substitué ou non substitué, comportant éventuellement dans sa chaîne un ou plusieurs hétéroatomes choisis parmi S, O, N et Si ;
- $R^5$ représente -NH- ou -O- ;
- $R^6$ représente une simple liaison ou un groupe hydrocarboné de 1 à 20 atomes de carbone, substitué ou non substitué, comportant éventuellement dans sa chaîne un ou plusieurs hétéroatomes choisis parmi S, O, N et Si ;
- $R^7$ représente un groupe dérivé d'un éther-couronne.

**20.** Procédé selon la revendication 19, dans lequel la phase liquide organique est constituée de toluène, de xylène, d'un mélange pyridine-toluène, d'un mélange pyridine-xylène, d'un mélange pyridine-heptane, d'un mélange pyridine-xylène-eau, d'un mélange pyridine-toluène-eau, ou d'un mélange pyridine-heptane-eau.

**21.** Procédé selon la revendication 19, dans lequel la phase liquide est un mélange de 1,4-dioxane et d'acide chlorhydrique.

**22.** Procédé selon l'une quelconque des revendications 19 à 21, dans lequel $R^1$, $R^2$ et $R^3$ sont des groupes méthoxy ou éthoxy, ou un atome de chlore.

**23.** Utilisation d'un support à base de gel de silice selon l'une quelconque des revendications 16 à 18 ou du support obtenu par le procédé selon l'une quelconque des revendications 19 à 22, pour la séparation par chromatographie de cations ou de molécules comportant des fonctions amines.

**24.** Utilisation selon la revendication 23, dans laquelle les molécules comportant des fonctions amines sont des amino-acides.

**Patentansprüche**

**1.** Verbindung der Formel (I):

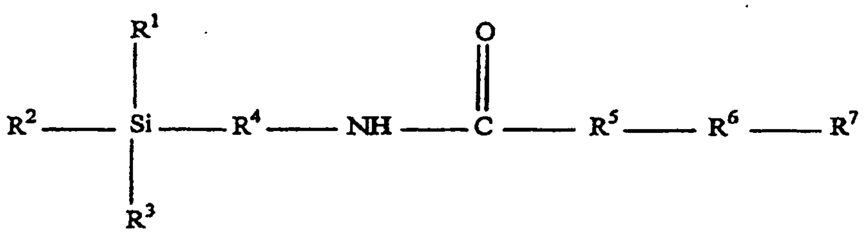

(I)

worin:

- $R^1$, $R^2$ und $R^3$, die gleich oder verschieden sein können, jeweils stehen für ein Halogenatom oder eine Alkoxygruppe mit 1 oder 2 Kohlenstoffatomen;
- $R^4$ steht für eine substituierte oder unsubstituierte Kohlenwasserstoffgruppe mit 1 bis 20 Kohlenstoffatomen, die in ihrer Kette gegebenenfalls ein oder mehrere Heteroatome, ausgewählt aus S, O, N und Si, aufweist;
- $R^5$ steht für -NH- oder -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist; und
- $R^7$ steht für eine von einem Kronenether abgeleitete Gruppe.

**2.** Verbindung nach Anspruch 1, in der $R^1$, $R^2$ und $R^3$ für die Methoxy- oder Ethoxygruppe stehen.

**3.** Verbindung nach Anspruch 1, in der $R^1$, $R^2$ und $R^3$ für Chlor stehen.

**4.** Verbindung nach Anspruch 1, in der die Kohlenwasserstoffgruppe mit 1 bis 20 Kohlenstoffatomen eine substituierte oder unsubstituierte Alkylen-, Arylen-, Alkylarylen-, Arylalkylengruppe ist, die gegebenenfalls ein oder mehrere Heteroatome, ausgewählt aus O, S, N und Si, umfasst.

**5.** Verbindung nach Anspruch 4, in der $R^4$ steht für eine Alkylengruppe der Formel $-(CH_2)_n-$, worin n für eine ganze Zahl von 1 bis 20 steht.

**6.** Verbindung nach Anspruch 4, in der $R^4$ steht für eine Gruppe der Formel (II)

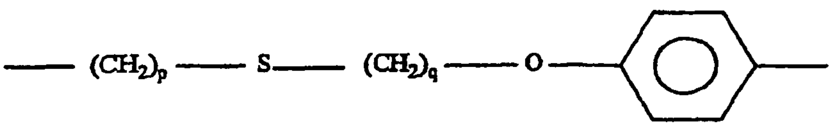

(II)

in der p und q, die gleich oder verschieden sein können, für ganze Zahlen stehen, sodass $p+q \leq 14$.

**7.** Verbindung nach Anspruch 1, in der $R^6$ für eine einfache Bindung oder eine Methylengruppe steht.

**8.** Verbindung nach Anspruch 1, in der $R^7$ für eine Gruppe steht, die von einem Kronenether mit einer der folgenden Formeln abgeleitet ist:

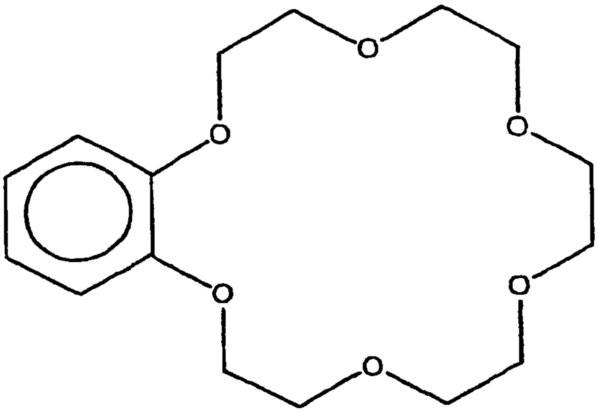

(IIIa)

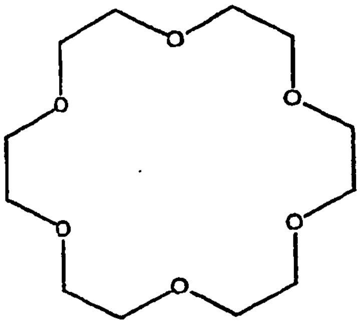

(IIIb)

**9.** Verbindung, ausgewählt aus Verbindungen der Formel:

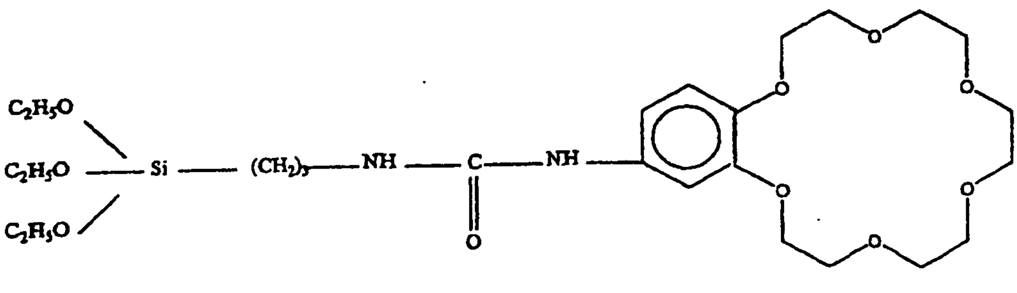

(IXa)

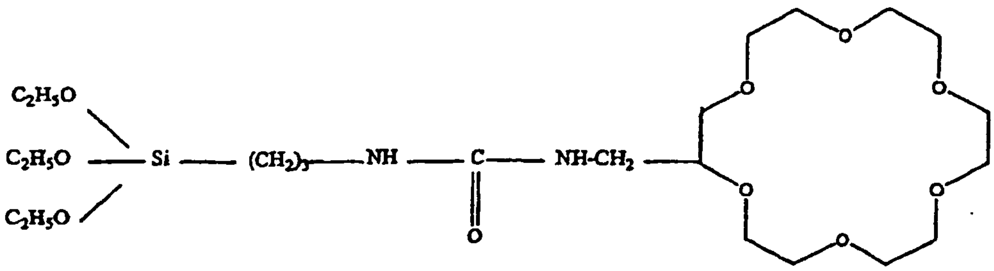

(IXb)

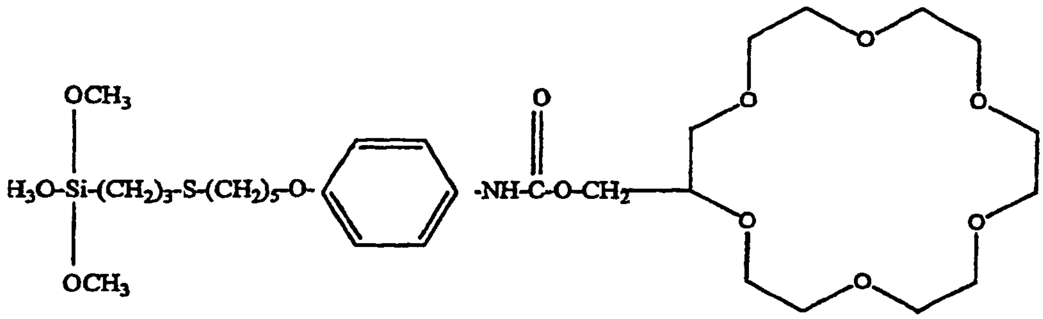

$C_{31}H_{55}O_{12}N, SSi$ $M_R = 693,93$ (XIIIa)

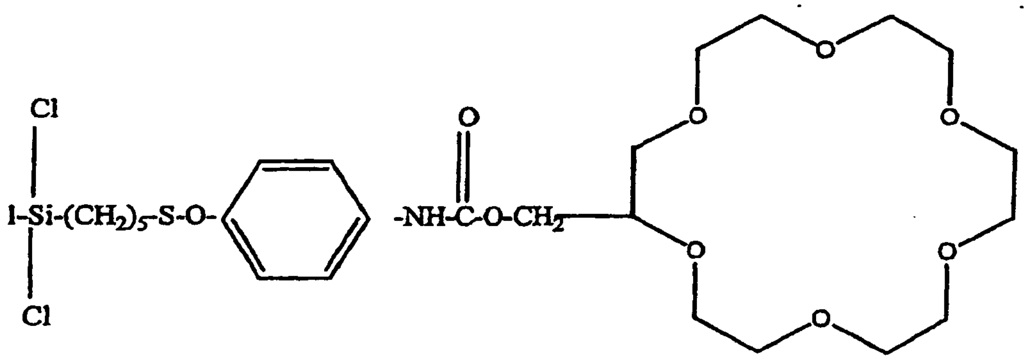

$C_{25}H_{40}O_9NCl_3Si$ $M_R = 633,04$ (XIIIb)

**10.** Verfahren zur Herstellung einer Verbindung der Formel:

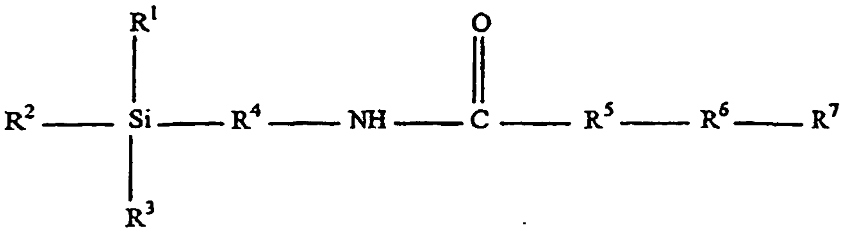 (I)

worin:

- $R^1$, $R^2$ und $R^3$, die gleich oder verschieden sein können, jeweils stehen für ein Halogenatom oder eine Alkoxygruppe mit 1 oder 2 Kohlenstoffatomen;
- $R^4$ steht für eine substituierte oder unsubstituierte Kohlenwasserstoffgruppe mit 1 bis 20 Kohlenstoffatomen, die in ihrer Kette gegebenenfalls ein oder mehrere Heteroatome, ausgewählt aus S, O, N und Si, aufweist;
- $R^5$ steht für -NH-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist; und
- $R^7$ steht für eine von einem Kronenether abgeleitete Gruppe,

das umfasst die Umsetzung eines Isocyanats der Formel (IV):

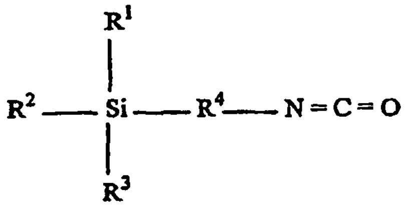

(IV)

worin $R^1$, $R^2$, $R^3$ und $R^4$ die oben angegebenen Bedeutungen haben, mit einem Amin der Formel

$R^7R^6$-$NH_2$ (V)

worn $R^6$ und $R^7$ die oben angegebenen Bedeutungen haben.

**11.** Verfahren zur Herstellung einer Verbindung der Formel (I):

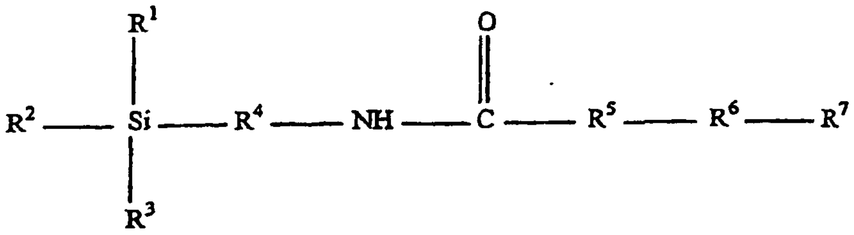

(I)

worin:

- $R^1$, $R^2$ und $R^3$, die gleich oder verschieden sein können, jeweils stehen für ein Halogenatom oder eine Alkoxygruppe mit 1 oder 2 Kohlenstoffatomen;
- $R^4$ steht für eine substituierte oder unsubstituierte Kohlenwasserstoffgruppe mit 1 bis 20 Kohlenstoffatomen, die in ihrer Kette gegebenenfalls ein oder mehrere Heteroatome, ausgewählt aus S, O, N und Si, aufweist;
- $R^5$ steht für -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist; und
- $R^7$ steht für eine von einem Kronenether abgeleitete Gruppe,

das umfasst die Umsetzung eines Isocyanats der Formel (IV)

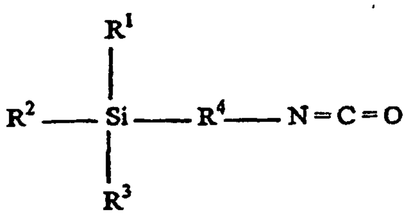

(IV)

in der $R^1$, $R^2$, $R^3$ und $R^4$ wie oben definiert sind, mit einem Alkohol der Formel

$R^7R^6OH$ (VI)

in der $R^6$ und $R^7$ wie oben definiert sind.

**12.** Verfahren zur Herstellung einer Verbindung der Formel (I):

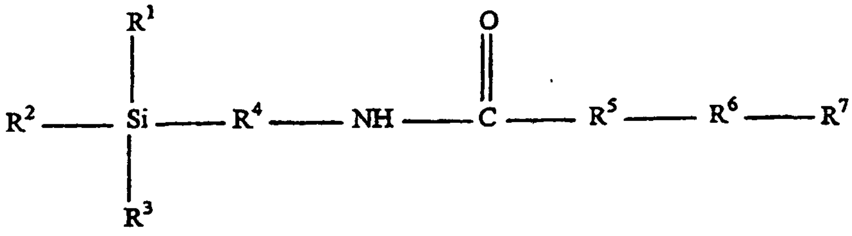 (I)

worin:

- $R^1$, $R^2$ und $R^3$, die gleich oder verschieden sein können, jeweils stehen für ein Halogenatom oder eine Alkoxygruppe mit 1 oder 2 Kohlenstoffatomen;
- $R^4$ steht für eine substituierte oder unsubstituierte Kohlenwasserstoffgruppe mit 1 bis 20 Kohlenstoffatomen, die in ihrer Kette gegebenenfalls ein oder mehrere Heteroatome, ausgewählt aus S, O, N und Si, aufweist;
- $R^5$ steht für -NH- oder -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist; und
- $R^7$ steht für eine von einem Kronenether abgeleitete Gruppe,

das umfasst die Umsetzung einer Verbindung der Formel (X):

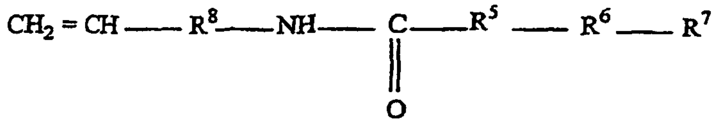 (X)

worin $R^5$, $R^6$ und $R^7$ wie oben definiert sind und $R^8$ für eine substituierte oder unsubstituierte Kohlenwasserstoffgruppe mit 1 bis 18 Kohlenstoffatomen steht, die gegebenenfalls in ihrer Kette ein oder mehrere Heteroatome, ausgewählt aus S, O, N und Si, umfasst, mit einer Verbindung der Formel (XI):

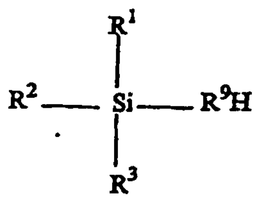 (XI)

worin $R^1$, $R^2$ und $R^3$ wie oben definiert sind und $R^9$ steht für eine einfache Bindung oder eine Gruppe der Formel $-(CH_2)_t-S-$, worin t steht für eine ganze Zahl von 1 bis 9, $R^3$ und $R^9$ solche Bedeutungen haben, dass die gesamte Gruppe $R^9-(CH_2)_2-R^8-$ der Gruppe $R^4$ entspricht.

**13.** Verfahren nach Anspruch 10, in dem das Isocyanat der Formel (VII) entspricht:

$$(C_2H_5O)_3\,Si—(CH_2)_3—N{=}C{=}O \qquad (VII)$$

und das Amin der folgenden Formel entspricht:

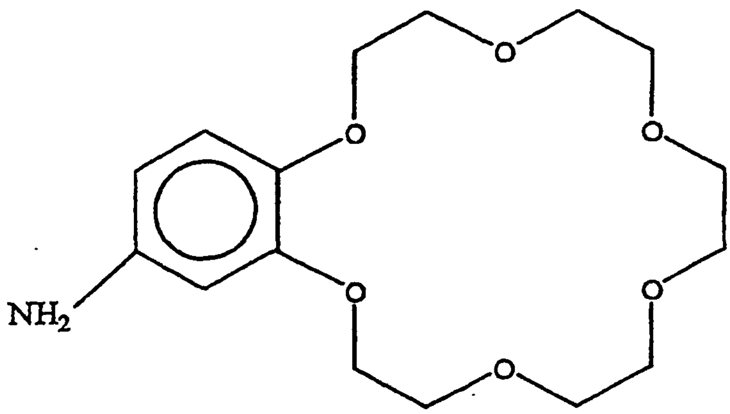

(VIIIa)

**14.** Verfahren nach Anspruch 12 zur Herstellung der Verbindung der Formel (XIIIa):

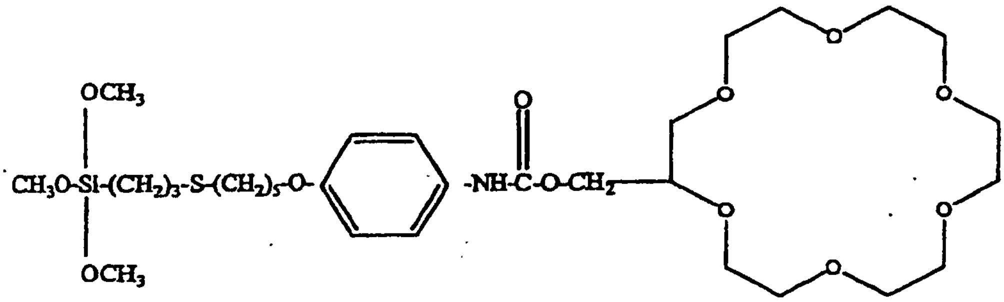

$C_{31}H_{55}O_{12}N, SSi$ $M_R = 693,93$

(XIIIa)

bei dem man die Verbindung der Formel (Xb):

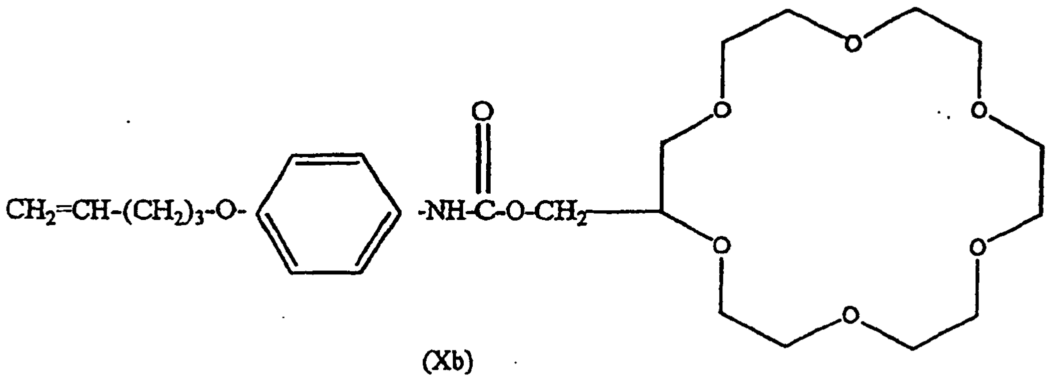

(Xb)

mit einer Verbindung der Formel (XVa) reagieren lässt:

$$(CH_3O)_3\text{—}Si\text{—}(CH_2)_3\text{—}SH \qquad (XVa)$$

**15.** Verfahren nach Anspruch 12 zur Herstellung einer Verbindung der Formel (XIIIb):

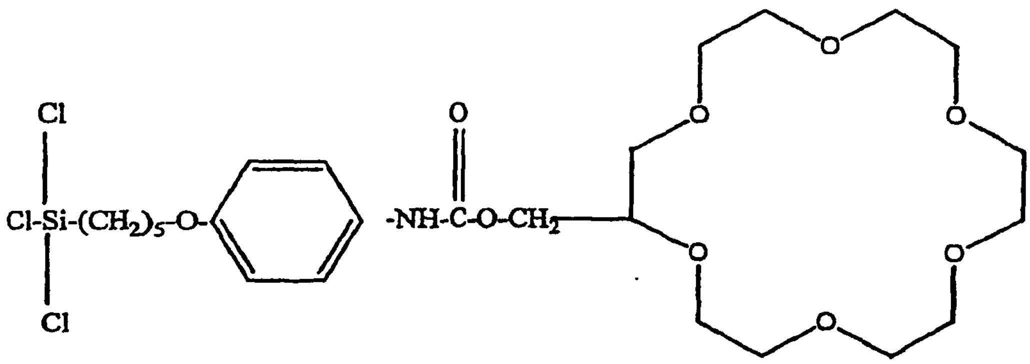

$C_{25}H_{40}O_9NCl_3Si$ $M_R$= 633,04 (XIIIb)

bei dem man die Verbindung der Formel (Xb):

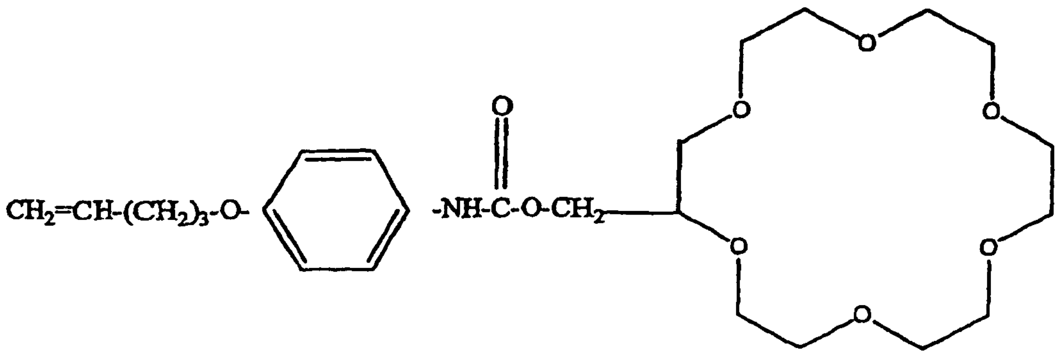

$C_{25}H_{39}O_9N$ $M_R$= 467,59 (Xb)

mit der Verbindung der Formel

$Cl_3SiH$ (XVb)

reagieren lässt.

**16.** Träger auf Silicagel-Basis, der verwendbar ist für die chromatografische Trennung und der Gruppen der Formel umfasst:

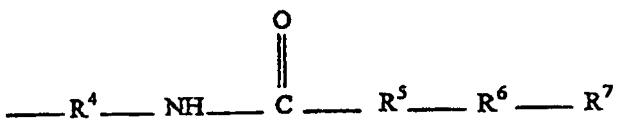

(XVI)

worin:

- $R^4$ steht für eine substituierte oder unsubstituierte Kohlenwasserstoffgruppe mit 1 bis 20 Kohlenwasserstoffatomen, die gegebenenfalls in ihrer Kette ein oder mehrere Heteroatome, ausgewählt aus S, O, N und Si, aufweist;
- $R^5$ steht für -NH- oder -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette eine oder mehrere Heteroatome, ausgewählt aus S, O, N und Si, umfasst; und
- $R^7$ steht für eine Gruppe, die von einem Kronenether abgeleitet ist, die über mindestens eine kovalente Bindung, die mindestens einen Siloxanrest der Formel aufweist:

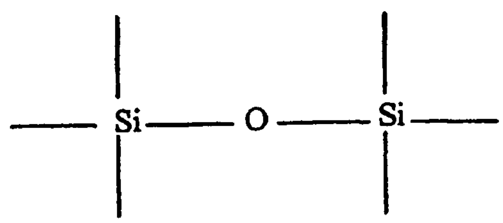

auf das Silicagel aufgepfropft sind.

**17.** Träger nach Anspruch 16, in dem die Dichte der aufgepfropften Gruppen der Formel (XVI) mindestens 0,5 mmol pro Gramm Träger beträgt.

**18.** Träger nach Anspruch 16 oder 17, in dem die auf das Silicagel aufgepfropften Gruppen einer der folgenden Formeln entsprechen

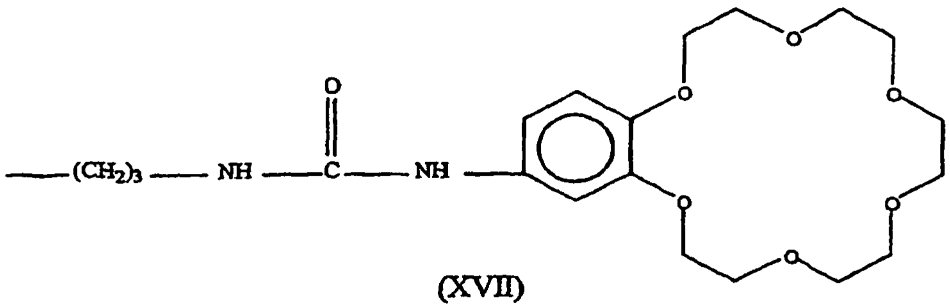

(XVII)

oder

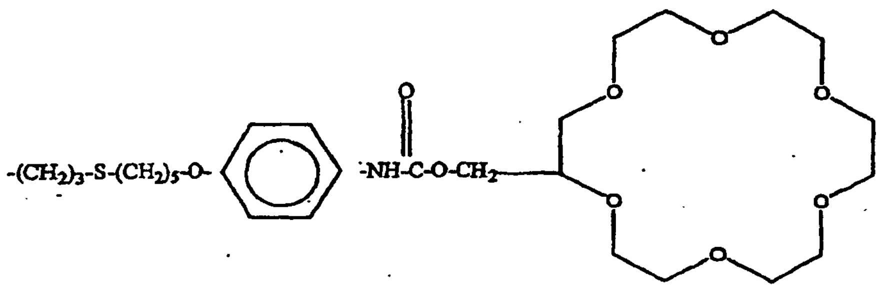

(XVIII)

oder

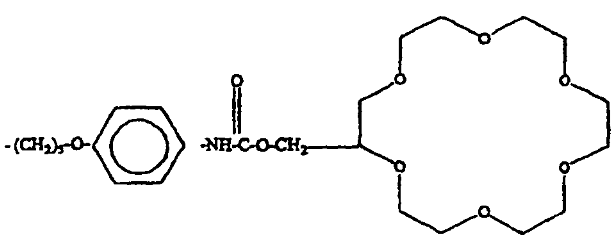

(XIX)

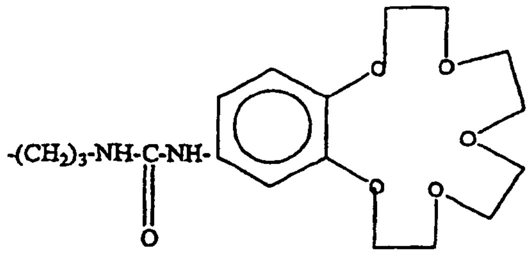

(XXI)

**19.** Verfahren zur Herstellung eines Trägers aus Silicagel, auf den Gruppen der Formel (XVI) aufgepfropft sind:

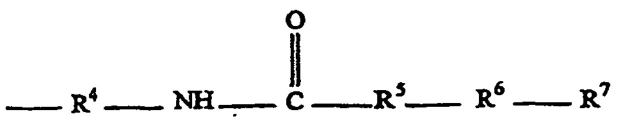

(XVI)

worin:

- $R^4$ steht für eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, umfasst;
- $R^5$ steht für -NH- oder -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist;
- $R^7$ steht für eine Gruppe, die von einem Kronenether abgeleitet ist, wobei das Verfahren darin besteht, dass man eine Suspension des Silicagels in einer organischen flüssigen Phase mit einer Lösung einer Verbindung der Formel (I) in einem organischen Lösungsmittel in Kontakt bringt:

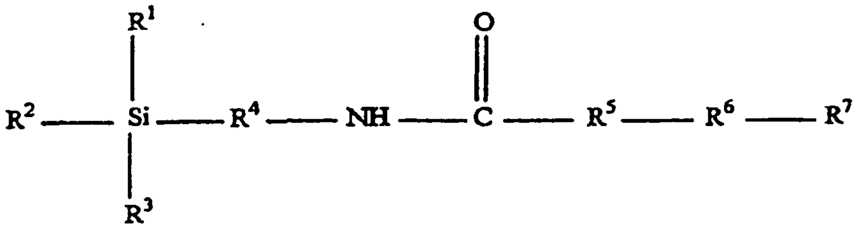

(I)

worin:

- $R^1$, $R^2$ und $R^3$, die gleich oder verschieden sein können, jeweils stehen für ein Halogenatom oder eine Alkoxygruppe mit 1 oder 2 Kohlenstoffatomen;
- $R^4$ steht für eine substituierte oder unsubstituierte Kohlenwasserstoffgruppe mit 1 bis 20 Kohlenstoffatomen, die in ihrer Kette gegebenenfalls ein oder mehrere Heteroatome, ausgewählt aus S, O, N und Si, aufweist;
- $R^5$ steht für -NH- oder -O-;
- $R^6$ steht für eine einfache Bindung oder eine substituierte oder unsubstituierte Kohlenwasserstoffgruppe mit 1 bis 20 Kohlenstoffatomen, die gegebenenfalls in ihrer Kette ein oder mehrere Heteroatome, ausgewählt aus S, O, N und Si, aufweist; und
- $R^7$ steht für eine von einem Kronenether abgeleitete Gruppe.

**20.** Verfahren nach Anspruch 19, in dem die organische flüssige Phase besteht aus Toluol, Xylol, einer Pyridin/Toluol-Mischung, einer Pyridin/Xylol-Mischung, einer Pyridin/Heptan-Mischung, einer Pyridin/Xylol-Wasser-Mischung, einer Pyridin/Toluol/Wasser-Mischung oder einer Pyridin/Heptan/Wasser-Mischung.

**21.** Verfahren nach Anspruch 19, in dem die flüssige Phase eine Mischung von 1,4-Dioxan und Chlorwasserstoffsäure ist.

**22.** Verfahren nach einem der Ansprüche 19 bis 21, in dem $R^1$, $R^2$ und $R^3$ Methoxy- oder Ethoxygruppen oder ein Chloratom darstellen.

**23.** Verwendung eines Trägers auf Silicagel-Basis nach einem der Ansprüche 16 bis 18 oder des Trägers, wie er bei dem Verfahren nach einem der Ansprüche 19 bis 22 erhalten wird, für die chromatografische Trennung von Kationen oder Molekülen, die Aminfunktionen aufweisen.

**24.** Verwendung nach Anspruch 23, in der die Moleküle, die Aminfunktionen aufweisen, Aminosäuren sind.

## Claims

**1.** Compound corresponding to the formula (I):

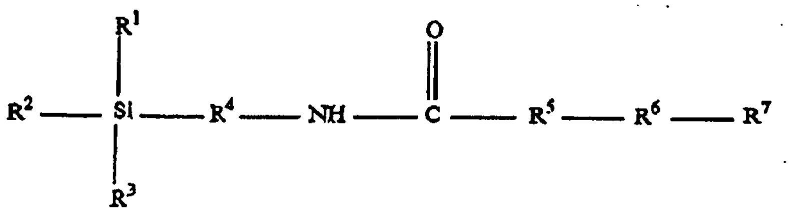

(I)

in which:

- $R^1$, $R^2$ and $R^3$, which can be identical or different, represent a halogen atom or an alkoxy group of 1 or 2 carbon atoms;
- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH- or -O-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether.

**2.** Compound according to Claim 1, in which $R^1$, $R^2$ and $R^3$ represent the methoxy group or the ethoxy group.

**3.** Compound according to Claim 1, in which $R^1$, $R^2$ and $R^3$ represent chlorine.

**4.** Compound according to Claim 1, in which the hydrocarbonaceous group of 1 to 20 carbon atoms is a substituted or unsubstituted alkylene, arylene, alkylarylene or arylalkylene group optionally comprising one or more heteroatoms chosen from O, S, N and Si.

**5.** Compound according to Claim 4, in which $R^4$ is an alkylene group of formula $-(CH_2)_n-$ with n being an integer ranging from 1 to 20.

**6.** Compound according to Claim 4, in which $R^4$ is a group of formula (II):

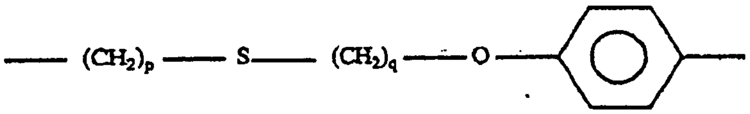

(II)

in which p and q are identical or different integers such that $p+q \leq 14$.

**7.** Compound according to Claim 1, in which $R^6$ is a single bond or a methylene group.

**8.** Compound according to Claim 1, in which $R^7$ is a group derived from a crown ether corresponding to one of the following formulae:

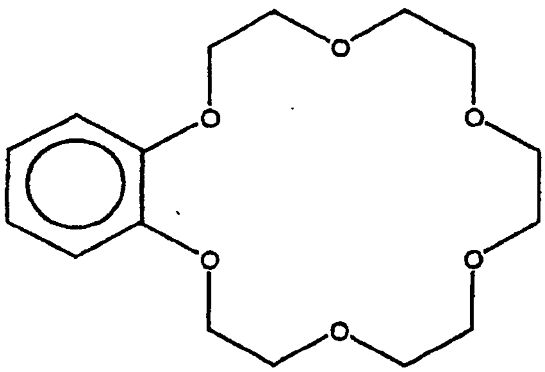

(IIIa)

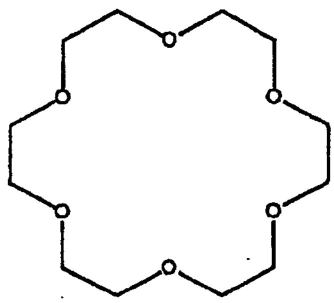

(IIIb)

27

**9.** Compound chosen from the compounds of formula:

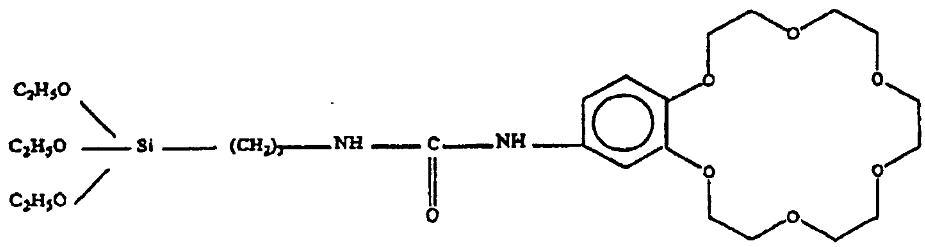

(IXa)

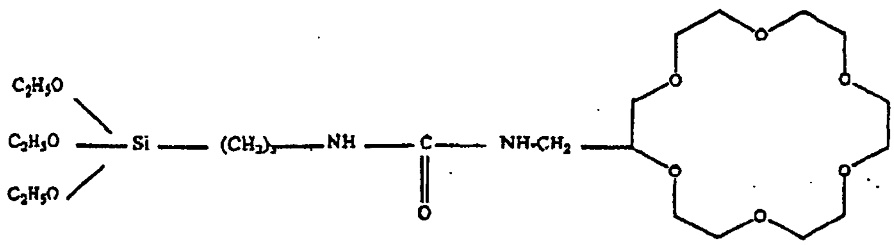

(IXb)

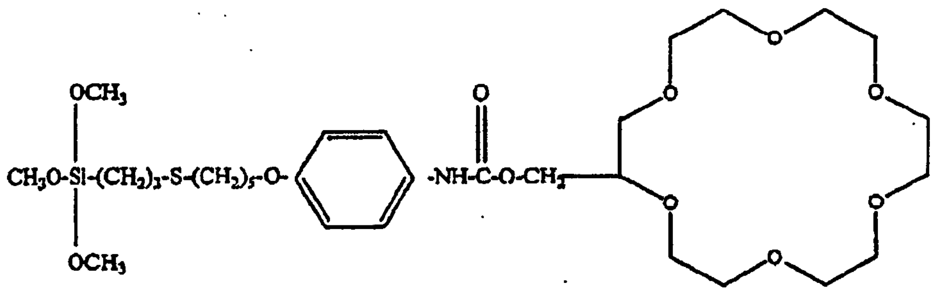

$C_{31}H_{35}O_{12}NSSi$ $M_R = 693.93$ (XIIIa)

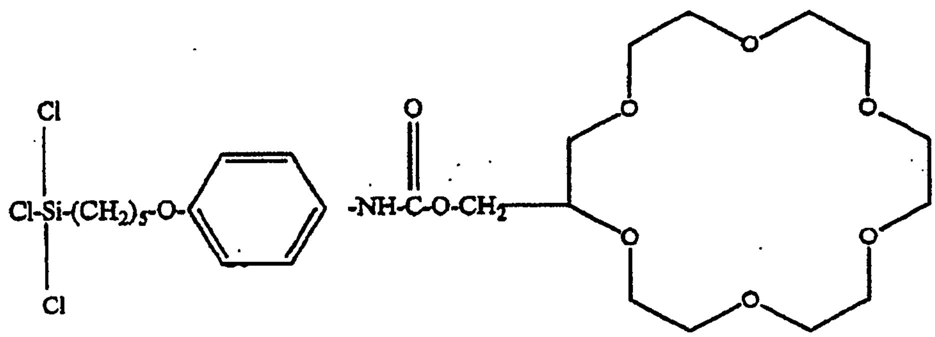

$C_{25}H_{40}O_{9}NCl_{3}Si$ $M_R = 633.04$ (XIIIb)

**10.** Process for the preparation of a compound of formula (I):

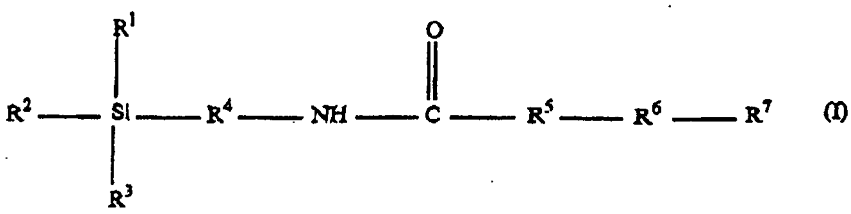

in which:

- $R^1$, $R^2$ and $R^3$, which can be identical or different, represent a halogen atom or an alkoxy group of 1 or 2 carbon atoms;
- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether, which comprises the reaction of an isocyanate of formula (IV):

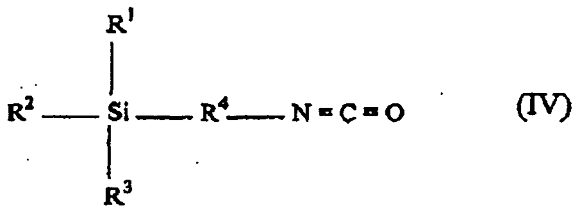

in which $R^1$, $R^2$, $R^3$ and $R^4$ are as defined above, with an amine of formula $R^7R^6$-$NH_2$ (V) in which $R^6$ and $R^7$ are as defined above.

**11.** Process for the preparation of a compound of formula (I):

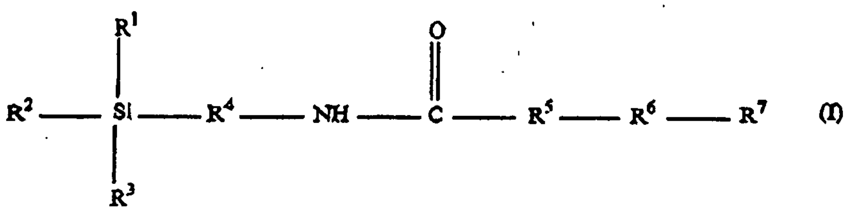

in which:

- $R^1$, $R^2$ and $R^3$, which can be identical or different, represent a halogen atom or an alkoxy group of 1 or 2 carbon atoms;
- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -O-;
- $R^6$ represents a single bond or a substituted or unsubstituted hydrocarbonaceous group of 1 to 20 carbon atoms optionally comprising, in its chain, one or more heteroatoms chosen from S, 0, N and Si; and
- $R^7$ represents a group derived from a crown ether, which comprises the reaction of an isocyanate of formula (IV):

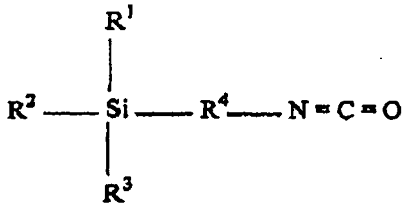

(IV)

in which $R^1$, $R^2$, $R^3$ and $R^4$ are as defined above, with an alcohol of formula $R^7R^6OH$ (VI) in which $R^6$ and $R^7$ are as defined above.

**12.** Process for the preparation of a compound of formula (I):

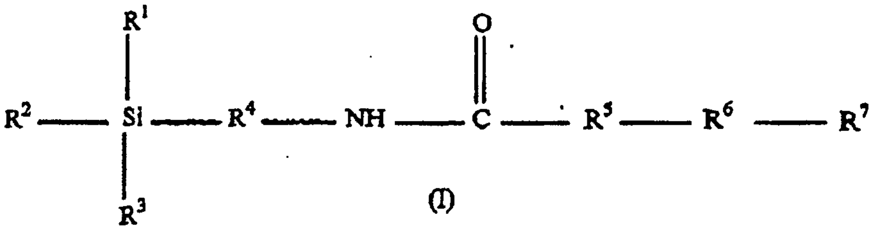

(I)

in which:

- $R^1$, $R^2$ and $R^3$, which can be identical or different, represent a halogen atom or an alkoxy group of 1 or 2 carbon atoms;
- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH- or -O-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether,

which comprises the reaction of a compound of formula (X):

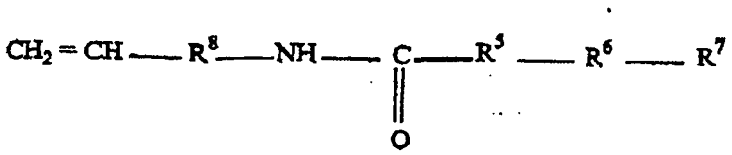

(X)

in which $R^5$, $R^6$ and $R^7$ are as defined above and $R^8$ represents a substituted or unsubstituted hydrocarbonaceous group of 1 to 18 carbon atoms optionally comprising, in its chain, one or more heteroatoms chosen from S, O, N and Si, with a compound of formula (XI):

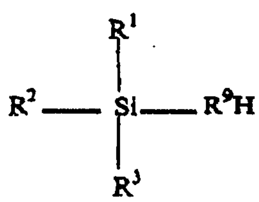

(XI)

in which $R^1$, $R^2$ and $R^3$ are as defined above and $R^9$ is a single bond or a group of formula $-(CH_2)_t-S-$ with t being an integer ranging from 1 to 9, $R^8$ and $R^9$ being such that the combination $R^9-(CH_2)_2-R^8-$ corresponds to the $R^4$ group.

**13.** Process according to Claim 10, in which the isocyanate corresponds to the formula (VII):

$$(C_2H_5O)_3Si-(CH_2)_3-N=C=O \qquad (VII)$$

and the amine corresponds to the formula:

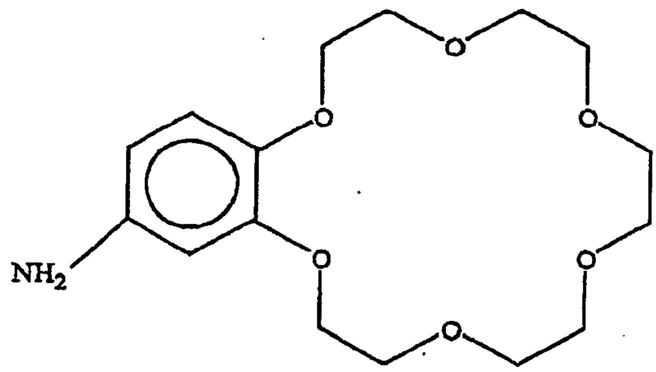

(VIIIa)

**14.** Process according to Claim 12 for the preparation of the compound of formula (XIIIa):

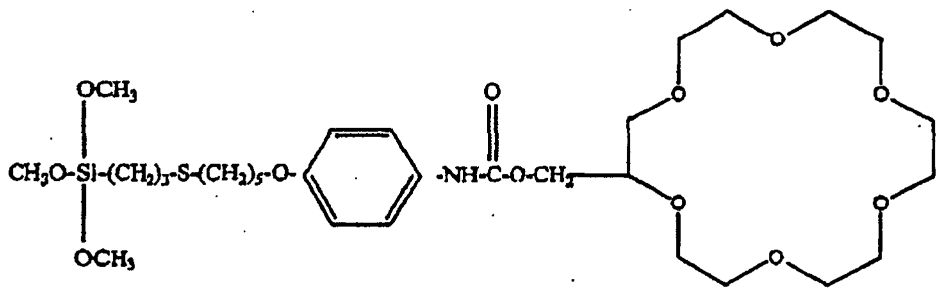

$C_{31}H_{55}O_{12}NSSi$ $M_R = 693.93$

(XIIIa)

in which the compound of formula (Xb):

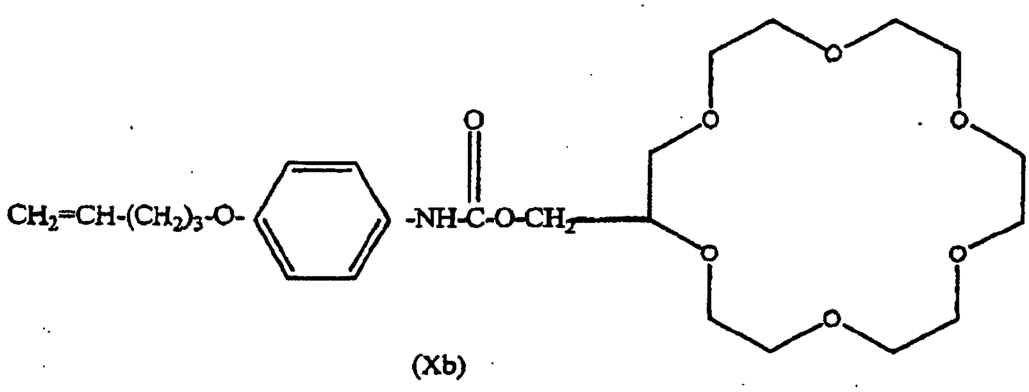

(Xb)

is reacted with the compound of formula (XVa):

$$(CH_3O)_3-Si-(CH_2)_3-SH \qquad (XVa)$$

**15.** Process according to Claim 12 for the preparation of the compound of formula (XIIIb):

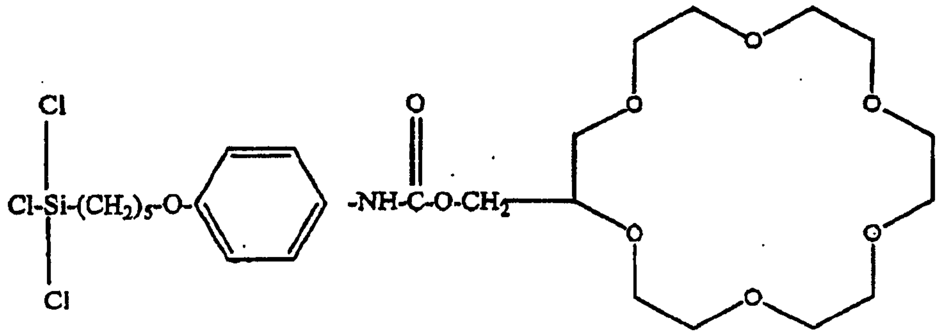

$C_{25}H_{40}O_9NCl_3Si$ $M_R$= 633.04 (XIIIb)

in which the compound of formula (Xb):

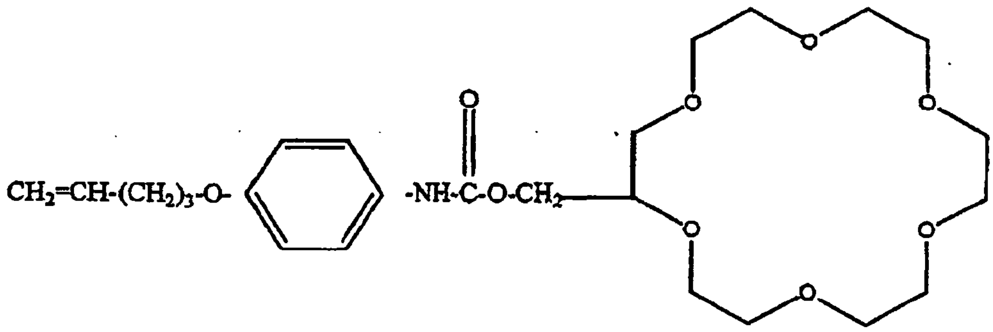

$C_{25}H_{39}O_9N$ $M_R$= 467,59 (Xb)

is reacted with the compound of formula $Cl_3SiH$ (XVb).

**16.** Support based on silica gel, useful for chromatographic separation, comprising groups of formula (XVI):

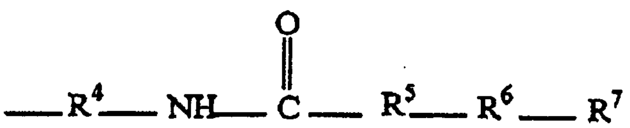

(XVI)

in which:

- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH- or -O-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether,

grafted to the silica gel by at least one covalent bond comprising at least one siloxane radical:

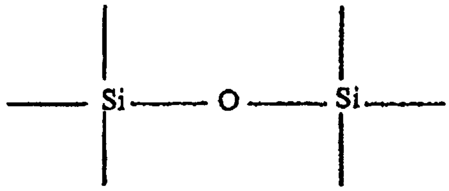

17. Support according to Claim 16, in which the density of grafted groups of formula (XVI) is at least 0.5 mmol per g of support.

18. Support according to Claim 16 or 17, in which the groups grafted to the silica gel correspond to one of the following formulae:

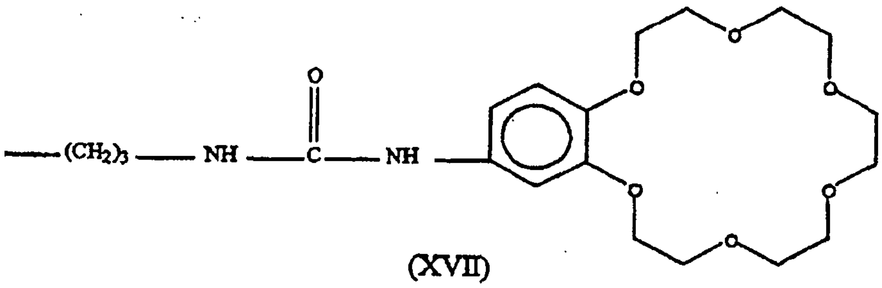

(XVII)

or

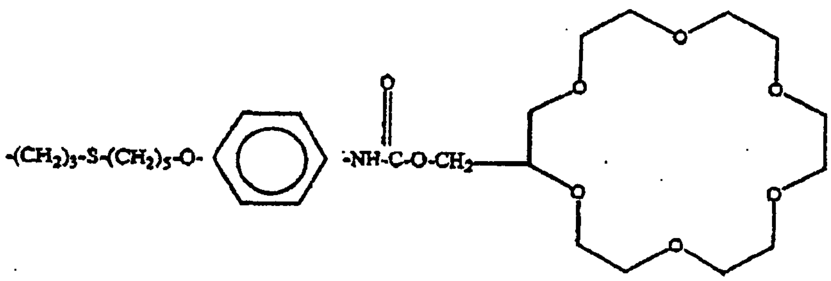

(XVIII)

or

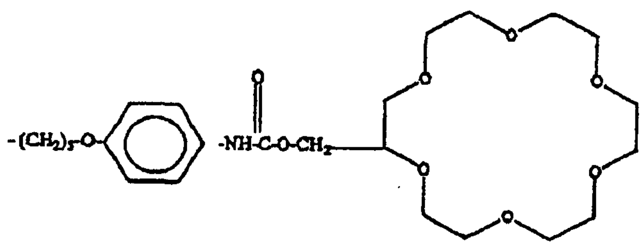

(XIX)

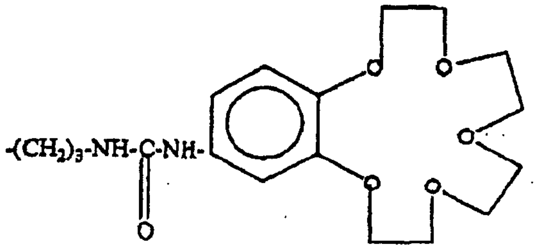

(XXI)

**19.** Process for the manufacture of a support made of silica gel grafted by groups of formula (XVI):

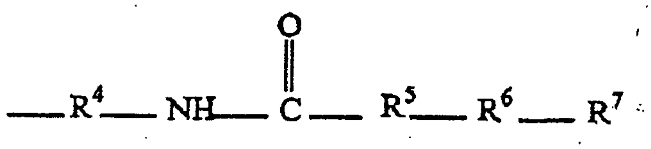

(XVI)

in which:

- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH- or -0-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether,

which consists in bringing a suspension of the silica gel in a liquid organic phase into contact with a solution in an organic solvent of a compound of formula (I) :

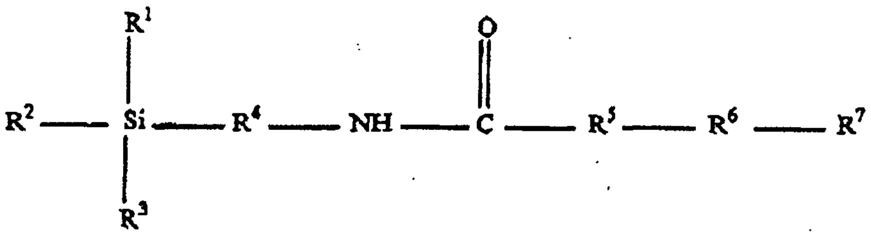

(I)

in which:

- $R^1$, $R^2$ and $R^3$, which can be identical or different, represent a halogen atom or an alkoxy group of 1 or 2 carbon atoms;
- $R^4$ represents a substituted or unsubstituted hydrocarbonaceous group of 1 to 20 carbon atoms optionally comprising, in its chain, one or more heteroatoms chosen from S, O, N and Si;
- $R^5$ represents -NH- or -O-;
- $R^6$ represents a single bond or a substituted or unsubstituted hydrocarbonaceous group of 1 to 20 carbon atoms optionally comprising, in its chain, one or more heteroatoms chosen from S, O, N and Si; and
- $R^7$ represents a group derived from a crown ether.

**20.** Process according to Claim 19, in which the liquid organic phase is composed of toluene, xylene, a pyridine/toluene

mixture, a pyridine/xylene mixture, a pyridine/heptane mixture, a pyridine/xylene/water mixture, a pyridine/toluene/water mixture or a pyridine/heptane/water mixture.

**21.** Process according to Claim 19, in which the liquid phase is a mixture of 1,4-dioxane and of hydrochloric acid.

**22.** Process according to any one of Claims 19 to 21, in which $R^1$, $R^2$ and $R^3$ are methoxy or ethoxy groups or a chlorine atom.

**23.** Use of a support based on silica gel according to any one of Claims 16 to 18 or of the support obtained by the process according to any one of Claims 19 to 22 for the separation by chromatography of cations or of molecules comprising amine functional groups.

**24.** Use according to Claim 23, in which the molecules comprising amine functional groups are amino acids.

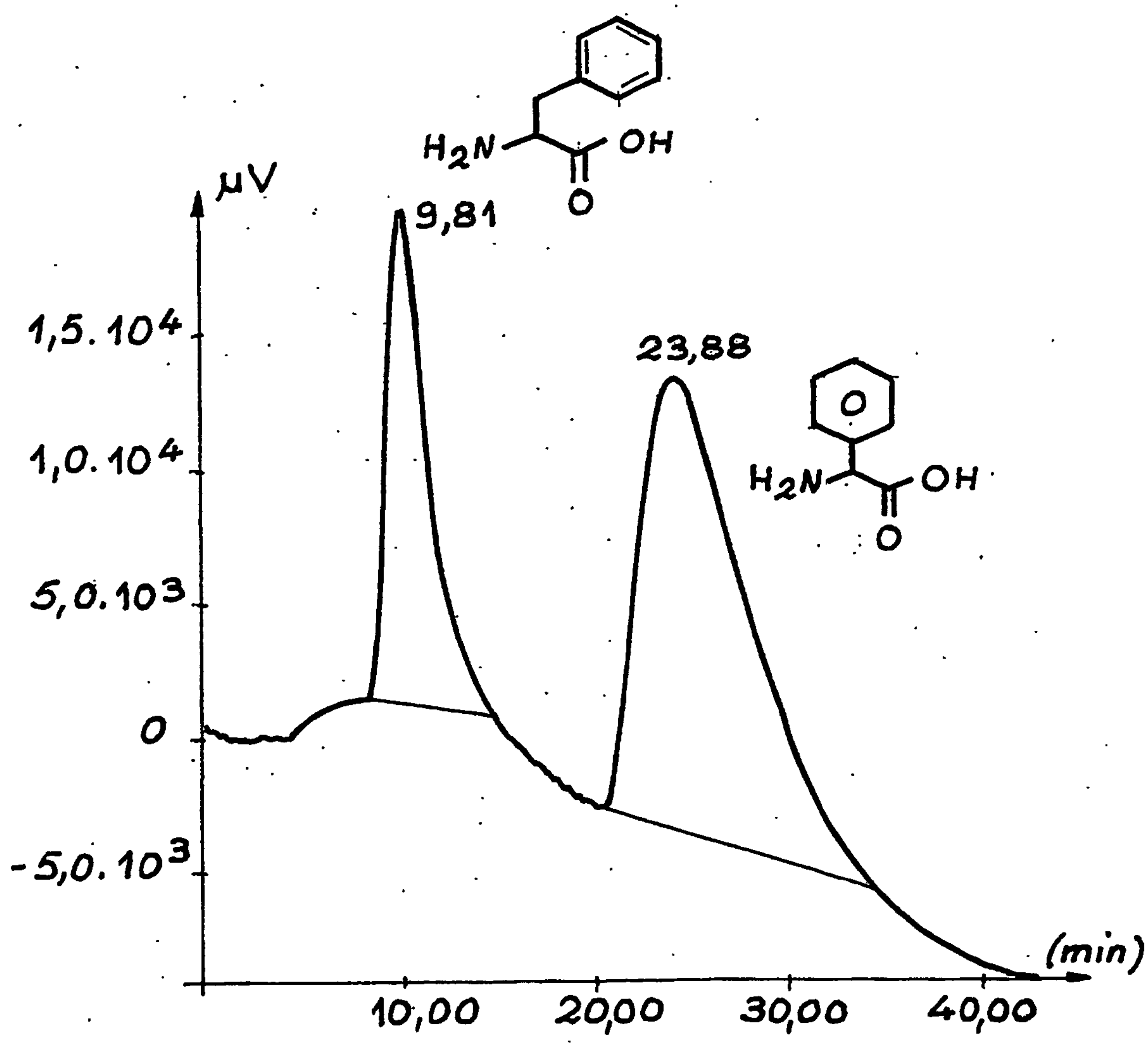


FIG. 1

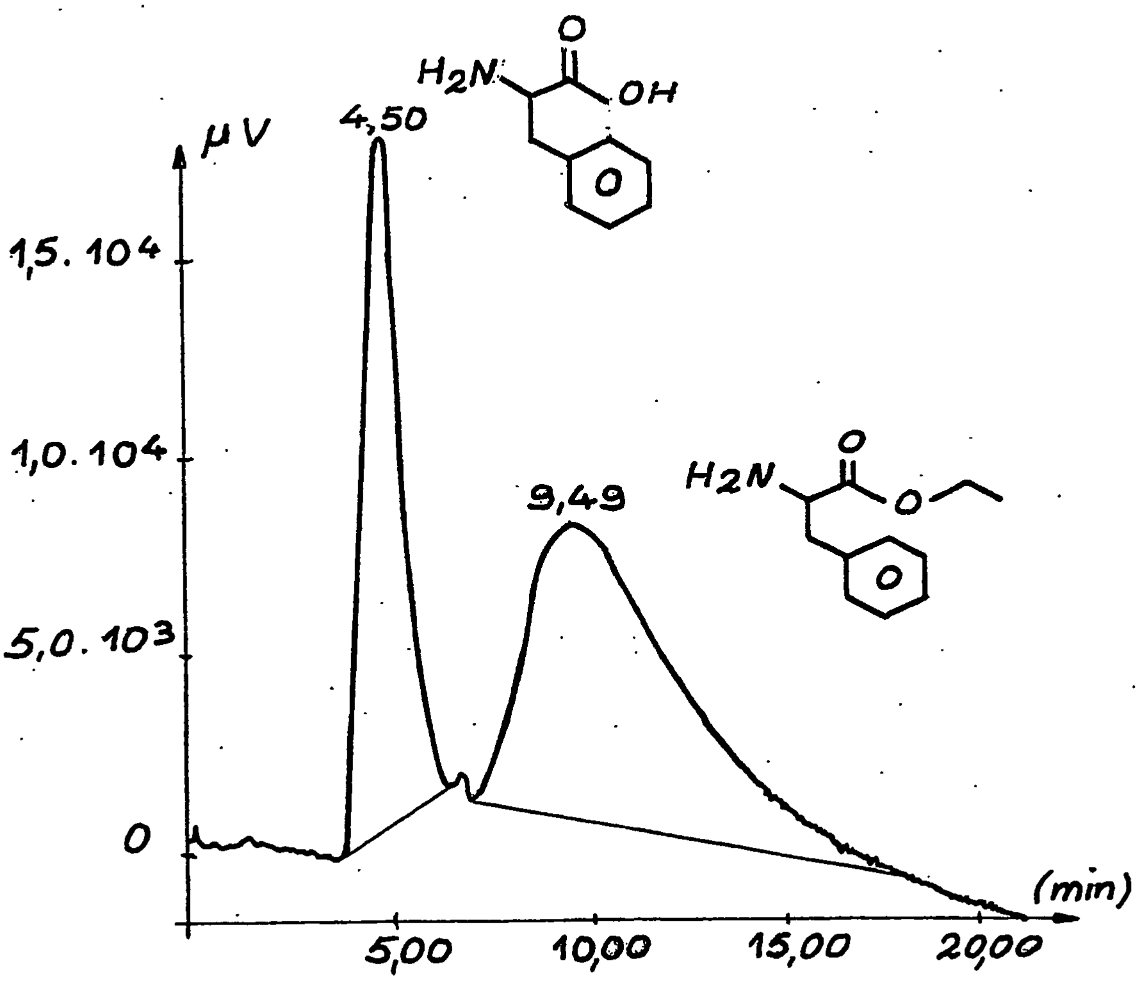


FIG. 2

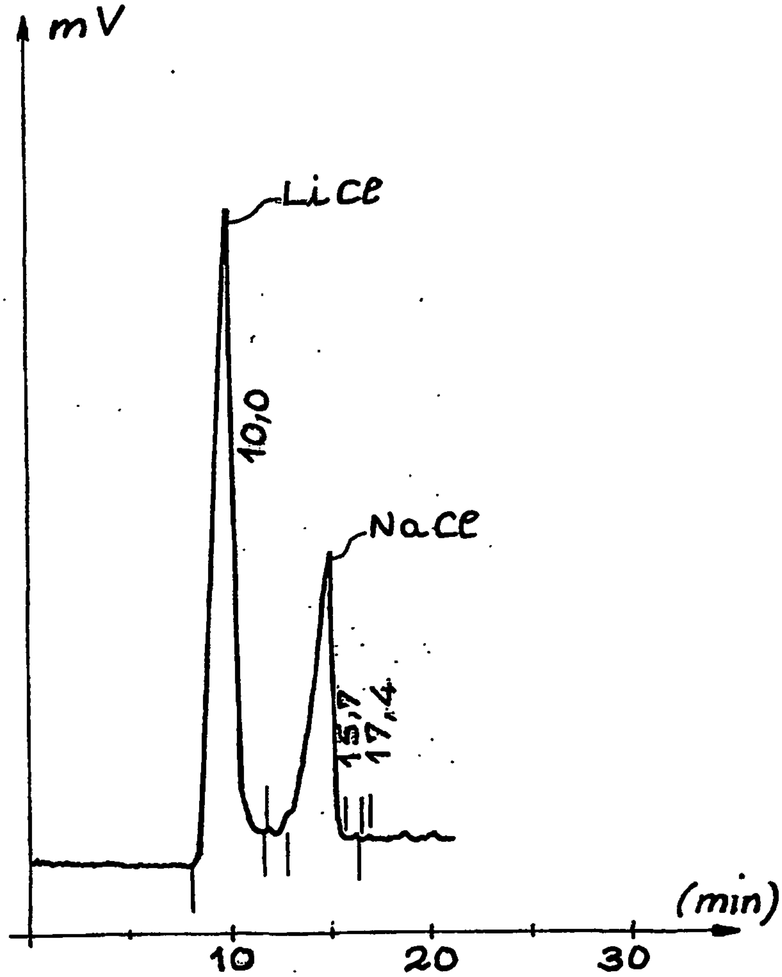


FIG. 3